# EUROPÄISCHE PATENTSCHRIFT

(11) **EP 2 842 899 B1**
(45) Veröffentlichungstag und Bekanntmachung des Hinweises auf die Patenterteilung: **02.11.2016**
(21) Anmeldenummer: 13004256.7
(22) Anmeldetag: 29.08.2013
(51) Int. Cl.: B66B 1/34, B66B 7/06, B66B 13/22

(54) **Messband für eine Aufzugvorrichtung**
Measuring tape for an elevator
Ruban de mesure pour un ascenseur

(43) Veröffentlichungstag der Anmeldung: 04.03.2015
(73) Patentinhaber: Cedes AG, 7302 Landquart (CH)
(72) Erfinder: De Coi, Beat, 7320 Sargans (CH); Leutenegger, Dr. Tobias, 7000 Chur (CH); Giger, Jan, 7233 Jenaz (CH); Thönz, Christian E., 6315 Oberägeri (CH)
(74) Vertreter: Otten, Roth, Dobler & Partner mbB Patentanwälte

(56) Entgegenhaltungen:
- EP-A1- 1 321 423
- EP-A1- 2 067 732
- EP-A1- 2 546 181
- WO-A1-03/066496
- US-A- 3 663 881

## Beschreibung

Die Erfindung betrifft ein Messband zur Bestimmung der Position einer Fahrkabine in einem Aufzugschacht nach dem Oberbegriff des Anspruchs 1, Peripheriegeräte nach dem Oberbegriff des Anspruchs 15 sowie eine Aufzugvorrichtung nach dem Oberbegriff des Anspruchs 17.

Aus dem Stand der Technik sind Messbänder oder Codebänder bekannt, die entlang des Aufzugsschachts angebracht sind und Positionsmarkierungen zur Verfügung stellen, damit die Fahrkabine sensorisch diese Positionsmarkierungen auslesen und dadurch ihre aktuelle Position ermitteln kann. Zudem ist aus der EP 2 546 181 A1 ein Aufzug mit einem Hängekabel bekannt, welches zur Führung von Energie und Signalen sowie zur Codierung einer Schachtinformation dient.

Aufgabe der Erfindung ist es, eine Aufzugvorrichtung bereitstellen zu können, welche vereinfachte Wartungsmöglichkeiten bietet.

Diese Aufgabe wird, ausgehend von einem Messband, einem Peripheriegerät sowie einer Aufzugvorrichtung der eingangs genannten Art, durch die kennzeichnenden Merkmale der Ansprüche 1, 15 und 17 gelöst.

Durch die in den abhängigen Ansprüchen genannten Maßnahmen sind vorteilhafte Ausführungen und Weiterbildungen der Erfindung möglich.

Das erfindungsgemäße Messband oder auch Codeband ist zunächst zur Markierung der Position der Fahrkabine in einem Aufzugschacht ausgebildet, wobei der Aufzugschacht über wenigstens zwei Stockwerke reicht. Das Messband ist in Bezug auf seine Länge so ausgebildet, dass es sich wenigstens über zwei Stockwerke erstreckt, sodass die Fahrkabine in jedem Stockwerk anhand des Messbands ihre Position ermitteln kann; das Messband trägt dazu eine Markierungseinheit zur Markierung von wenigstens zwei Positionen im Aufzugschacht, sodass die Fahrkabine sensorisch anhand dieser Markierungen ermitteln kann, an welcher Stelle sie sich gerade befindet. Die Markierungseinheit verläuft entlang der Länge des Messbandes, d.h. sie erstreckt sich zumindest über wesentliche Teile des Messbandes.

Dementsprechend zeichnet sich das erfindungsgemäße Messband dadurch aus, dass eine Übertragungsvorrichtung zur Übertragung von Informationen mit wenigstens einer Kommunikationsleitung zur Übermittlung eines Signals vorgesehen ist und die Kommunikationsleitung entlang der Länge des Messbandes verläuft. Das Signal kann insbesondere Träger einer Information sein. Das erfindungsgemäße Messband umfasst somit eine Kommunikationsleitung, die sich über die gesamte Länge des Messbands oder zumindest über weite Teile der Länge des Messbands erstreckt, sodass diese auch von Stockwerk zu Stockwerk mitgeführt wird. Damit die Fahrkabine das Messband gut auslesen kann, ist dieses regelmäßig an einer aus Sicht der Fahrkabine exponierten Stelle angebracht. Durch die erfindungsgemäße Maßnahme, die Kommunikationsleitung unmittelbar an das Messband anzubringen bzw. darin zu integrieren, ist die Kommunikationsleitung in vorteilhafter Weise besonders gut zugänglich und kann gegebenenfalls auch in einfacher Weise an praktisch jeder Stelle im Aufzugsschacht abgegriffen bzw. kontaktiert werden. Insbesondere wird dadurch folglich eine Kommunikation von Stockwerk zu Stockwerk ermöglicht.

Im Zusammenhang mit Aufzugvorrichtungen gibt es üblicherweise sehr viele elektrische und elektronische Geräte, die entsprechend über Versorgungskabel mit Strom versorgt werden, über Steuerungskabal kontrolliert werden können oder Daten über Kabel weiterleiten. Bei diesen Geräten handelt es sich um Bedienelektronik, Sensoren, Überwachungselektronik bis hin zu Klimatisierungsvorrichtungen, Beleuchtungsgeräten usw.

Von besonderer Bedeutung sind allerdings die Leitungen von Sicherungsvorrichtungen, da diese für den sicheren Betrieb des Aufzugs und die Sicherheit der Personen sorgen. Diese Sicherungsvorrichtungen kommen zum Beispiel im Zusammenhang mit der Türsensorik zum Einsatz, damit ausgeschlossen werden kann, dass eine Person in einer sich schließenden Tür eingeklemmt wird. Des Weiteren muss der Antrieb der Fahrkabine kontrollierbar sein, damit zum Beispiel bei geöffneten Türen kein Anfahren des Aufzugs möglich ist. Der Aufzug und insbesondere seine Sicherungsvorrichtungen müssen somit in besonderer Weise auch ständig kontrolliert, gewartet und instand gehalten werden. Um diese Wartung unkompliziert, schnell und somit auch ohne großen Kostenaufwand durchführen zu können, können die entsprechenden Kommunikationsleitungen am erfindungsgemäßen Messband einfach zugänglich gemacht werden. Eine aufwendige Suche nach den entsprechenden Leitungen in einem Kabelschacht ist somit nicht notwendig. Aufgrund der Tatsache, dass das erfindungsgemäße Messband auch entlang der einzelnen Stockwerke geführt wird, kann auch ein einfacher Zugang von jedem Stockwerk aus erreicht werden, sodass auch dieser verbesserte Zugang die Wartungsmöglichkeiten erheblich vereinfacht. Zudem kann durch Austausch einen handelüblichen Messbands gegen ein erfindungsgemäßes Messband auch einfach eine solche Leitung nachgerüstet werden und in einen bestehenden Aufzugsschacht neu eingesetzt werden.

Die Kommunikationsleitung kann als elektrische Leitung oder aber zur Übertragung optischer Signale, etwa als Glasfaserleitung ausgebildet sein.

Neben der eigentlichen Kommunikationsleitung kann die Übertragungsvorrichtung zusätzlich auch wenigstens eine Versorgungsleitung zur Stromversorgung aufweisen, wobei die Versorgungsleitung dann insbesondere parallel zur wenigstens einen Kommunikationsleitung angeordnet sein kann. Dadurch wird auch eine vereinfachte Zugangsmöglichkeit zu den entsprechenden Versorgungsleitungen in vorteilhafter Weise gewährleistet.

Gerade bei neu gebauten Häusern tritt regelmäßig der Effekt auf, dass sich der Bau mit der Zeit "setzt", das heißt, dass die Gebäude aufgrund von Materialbelastungen, Veränderungen in der Bausubstanz usw. mit der Zeit etwas gestaucht werden. Um diesem bauphysikalischen Effekt beim Bau eines Aufzugs in einem Gebäude von Anfang an Rechnung tragen zu können, können zum Beispiel Positionsmarkierungen am Aufzuggerüst, an dem die Fahrkabine fahrbar gelagert ist, angebracht werden, da das Fahrgerüst von dem Prozess des "Sich-Setzens" des Gebäudes zumindest nicht unmittelbar betroffen ist; die Markierungen ändern in diesem Fall ihre Position relativ zum Aufzug nicht. Eine solche Vorgehensweise kann jedoch die Problematik mit sich bringen, dass die Markierungen am Fahrgerüst nicht mehr mit den tatsächlichen Positionen der einzelnen Stockwerke im Gebäude übereinstimmen, sobald sich das Gebäude gesetzt hat.

Wird das Messband hingegen nicht am Fahrgerüst, sondern im Aufzugschacht befestigt, und zwar gleichzeitig in der Weise, dass es durchgängig oder zumindest an mehreren Stellen mit dem Aufzugschacht fest verbunden ist, so kann sich das Messband wölben, verformen oder zumindest unter Spannung stehen, wenn sich das Gebäude setzt. Das Messband kann somit beschädigt werden. Ein sich wölbendes Messband markiert zudem die Position der Fahrkabine an den entsprechenden Stellen ungenau und kann gegebenenfalls gar nicht ausgelesen werden. Es ist daher vorteilhaft, das Messband beweglich zu lagern und insbesondere an der Decke des Gebäudes aufzuhängen. Setzt sich das Gebäude, so wird das Messbands das an der Decke aufgehängt ist, ebenfalls bewegt. Dadurch, dass das Messband entlang des Auf zugsschachts wiederum nur beweglich gelagert, aber nicht an einzelnen Stellen befestigt ist, kann es sich mitbewegen, ohne gebogen bzw. gewölbt zu werden. Die Position kann sodann immer noch exakt abgelesen werden. Durch Vergleich des zeitlichen Verlaufs der relativen Positionen des Messbands im Vergleich zu seinen Lagerungsvorrichtungen kann ermittelt werden, wie stark sich das Gebäude gesetzt hat.

Auch im unteren Bereich des Messbands ist zusätzlich eine Montagevorrichtung vorgesehen, die eine Lagerung, vorzugsweise eine bewegliche Lagerung des Messbands ermöglicht, sodass auch bei einem sich setzenden Gebäude keine Spannungen und Verbiegungen des Messbands auftreten.

Insbesondere dann, wenn das Messband im Aufzugschacht aufgehängt ist, erfährt es über seine Länge hinweg große mechanische Belastungen, insbesondere durch sein Eigengewicht. Weitere mechanische Belastungen treten dadurch auf, dass das Messband vergleichsweise frei zugänglich ist und somit auch Windströmungen im Auf zugsschacht und auch Strömungen, die durch die Fahrt der Fahrkabine bedingt sind, ausgesetzt ist. Es ist zu beachten, dass die Fahrkabine teilweise mit relativ hoher Geschwindigkeit durch den Aufzug fährt. Darüber hinaus ist zu beachten, dass die Kabine bereits einen Großteil des Aufzugsschachts ausfüllt. Folglich bewegt die Fahrkabine eine große Luftmasse mit sich, welche die Fahrkabine bei ihrer Fahrt vor sich herschiebt. Es kommt auch zu Luftverwirbelungen, dem das Messband ausgesetzt ist. Aufgrund dessen kann es vorteilhaft sein, bei einem Ausführungsbeispiel der Erfindung nicht nur das Messband lediglich aus elektrischen Leitungen und Positionsmarkierungen zusammenzusetzen, sondern aus Stabilitätsgründen ein Trägerband vorzusehen, das die Stabilität des Messbands erhöht. Beispielsweise kann ein derartiges Trägerband aus Stahl gefertigt sein. Ansonsten würde die Gefahr bestehen, dass das Messband zu stark umhergewirbelt werden und es zu Beschädigungen kommen könnte.

Aus den gleichen Gründen kann in vorteilhafter Weise bei einer Weiterbildung der Erfindung das Messband als Verbundband aus wenigstens zwei Verbundschichten ausgebildet sein. Zudem können als Verbundschichten auch Isolationsschichten oder Abschirmschichten verwendet werden, welche also dafür sorgen, dass die Signalübertragung ungestört abläuft. Denkbar ist es aber insbesondere bei einem Ausführungsbeispiel der Erfindung, das Messband wenigstens teilweise kohlefaserverstärkt und/oder glasfaserverstärkt auszubilden, sodass es insgesamt an Stabilität gewinnt. Derartige Verstärkungen können also beispielsweise dafür sorgen, dass sich das Messband, bedingt durch sein Eigengewicht, nicht zu stark ausdehnt. Dies hätte zum einen zur Folge, dass die Markierungen mit der Zeit verzerrt würden und die Positionsangaben über die gesamte Länge immer stärker abweichen und fehlerbehaftet werden. Eine Ausdehnung aufgrund des Eigengewichts hätte aber auch zur Folge, dass beispielsweise eine erhöhte Zugbelastung auf die Leitungen oder auf einzelne Schichten des Messbands kommen würde, sodass Dehnungen des Bandes, Brüche, Risse, Verscherungen usw. nicht ausgeschlossen wären.

Eine Verstärkung des Messbands bei einer Ausführungsform der Erfindung besitzt aber auch den Vorteil, dass sie so eingebaut werden kann, dass eine gewisse Torsionssteifigkeit erreicht wird und das Messband sich weder verdrillen kann noch, bedingt durch Luftströmungen oder dergleichen, verschert wird. Somit kann das Messband länger instand bleiben und verwendet werden.

Bei einer vorteilhaften Ausführungsvariante der Erfindung ist die Markierungseinheit auf einer Seite des Trägerbandes angebracht, auf der die Markierungseinheit von der Fahrkabine ausgelesen werden kann. Bei der mit der Markierung versehenen Seite kann es sich also in vorteilhafter Weise um die der Fahrkabine zugewandte Seite des Trägerbandes handeln. Auf der gegenüberliegenden Seite des Trägerbandes kann sodann die Übertragungsvorrichtung angeordnet sein. Diese Anordnung ist auch aus Stabilitätsgründen vorteilhaft, weil das Band somit zu beiden Seiten gleichsam belastet werden kann. Ferner sind sodann die Leitungen der übertragungsvorrichtung auf der der Fahrkabine abgewandten Seite angeordnet und somit nicht direkt der Bewegung der Fahrkabine und den damit verbundenen mechanischen Belastungen ausgesetzt. Durch diese Maßnahme können also auch Beschädigungen reduziert werden.

Die Markierungseinheit kann bei einer Weiterbildung der Erfindung als Reflektorschicht ausgebildet sein, während die Markierungen als Aufdruck oder Beschichtung auf dieser Reflektorschicht vorgesehen sind. Hierdurch wird ein größtmöglicher Kontrast zwischen Markierung und dem restlichen Band ermöglicht. Insbesondere dann, wenn die Markierung als Barcode (eindimensionaler Barcode oder 2D-Code) ausgebildet ist, wird somit ein hoher Kontrast zwischen den "Strichen" bzw. "Feldern" und den dazwischen befindlichen "hellen Bereichen" ermöglicht. Die Beschichtung bzw. der Aufdruck kann also beispielsweise schwarz ausgebildet sein. Um einen möglichst starken Kontrast zu bekommen, kann der Aufdruck bzw. die Beschichtung das entsprechende Licht möglichst stark absorbieren. In der Regel wird Infrarotlicht eingesetzt. Denkbar ist aber auch die Verwendung von sichtbarem Licht (Wellenlänge: ca. 400 nm bis 800 nm). Auch die Reflektorschicht kann auf verschiedene Weise ausgebildet sein. Es kann sich dabei um eine Kunststoffschicht aus Polyester oder Polycarbonat handeln. Um das Licht möglichst effektiv zurück reflektieren zu können, kann auf der der Fahrkabine abgewandten Seite eine reflektierende Struktur oder Beschichtung ausgebildet sein. Auf diese Weise wird ermöglicht, dass die Markierung möglichst zuverlässig ausgelesen werden kann und es somit zu weniger Fehlern im Betriebsablauf des Aufzugs kommt.

Um die Kommunikationsleitungen gut schützen zu können, können diese Leitungen bei einer Ausführungsform der Erfindung in eine auf einer Seite des Trägerbandes angeordneten Isolationsschicht eingebettet sein. Sie werden dann vollständig umschlossen und können nicht in Kontakt geraten mit insbesondere mechanisch bewegten Teilen. Dadurch kann die Sicherheit und Zuverlässigkeit verbessert werden.

Im oberen und unteren Bereich des Messbands, also insbesondere dort, wo das Messband am Aufzugschacht befestigt oder beweglich gelagert ist, können Anschlusskontakte zum Kontaktieren, vor allem zum Einspeisen bzw. Abgreifen des übermittelten elektrischen Signals an bzw. auf der Kommunikationsleitung vorgesehen sein. Auch eine Spannung kann dort an die Leitungen im Messband angelegt werden.
Damit ein Abgriff nicht nur an einem der Enden des Messbands möglich ist, sondern auch an anderen Stellen dazwischen, kann wenigstens ein Zusatzkontakt zum Kontaktieren, Einspeisen bzw. Abgreifen des übermittelten elektrischen Signals zwischen der oberen und unteren Montagevorrichtung bzw. zwischen den dort angebrachten Anschlusskontakten vorgesehen sein. Das Signal oder die Spannung kann somit an jedem Punkt zwischen dem oberen und unteren Ende des Messbands abgegriffen werden. Dadurch wird ermöglicht, dass diese Informationen, die Spannung usw. überall im Aufzugsschacht zur Verfügung stehen können. Insbesondere kann auf einzelnen Stockwerken ein solcher Zusatzkontakt vorgesehen sein, damit möglichst einfach auf das Messband an den entsprechenden Stellen zugegriffen werden kann.

Ein Anschluss- bzw. Zusatzkontakt kann bereits mit dem Messband vormontiert sein, sodass er stets zur Verfügung steht, wenn er benötigt wird. Insbesondere ist es also denkbar, diese Zusatzkontakte in regelmäßigen Abständen am Messband anzubringen, damit ein möglichst flexibler Einsatz des Messbands gemäß dieser Ausführungsform der Erfindung erreicht werden kann. Es ist also auch möglich, nicht nur auf jedem Stockwerk bzw. auf Höhe jedes Stockwerks, sondern gewissermaßen in beliebiger Zahl und mit beliebiger Dichte Zusatzkontakte zur Verfügung zu stellen.

Zusatzkontakte können in vorteilhafter Weise als Steckdose bzw. als weibliche Steckverbindungen ausgebildet sein, sodass auch bei zufälliger Berührung kein Kontakt zu den Leitungen hergestellt wird, jedoch zur Herstellung eines Kontaktes lediglich ein passender Stecker bereitgestellt werden muss. Zudem kann aus Sicherheitsgründen eine abnehmbare bzw. aufklappbare Abdeckung des Zusatzkontaktes vorgesehen sein. Insgesamt stellen derartige Zusatzkontakte also eine besonders sichere und auch leicht zugängliche "Plug and Play"-Verbindung dar.

Falls optische Leitungen wie Glasfasern verwendet werden, können als Anschlusskontakte oder Zusatzkontakte auch optische Vorrichtungen zur Ein- bzw. Auskopplung von Licht anstelle der elektrischen Kontakte benutzt werden.

Es gibt verschiedene Ausführungsmöglichkeiten gemäß der Erfindung, um welche Bauart es sich bei den verwendeten Leitungen, Versorgungsleitungen und Kommunikationsleitungen, handeln kann: zum Beispiel ein Draht, eine aufgedruckte Leiterbahn, eine aufgeklebte Leiterbahn oder eine Leiterbahn auf einer biegbaren Leiterplatte. Es ist auch möglich, verschiedenen dieser Bauarten innerhalb eines einzigen Messbands vorzusehen. Beispielsweise ist es denkbar, Versorgungsleitungen oder besonders wichtige Leitungen als Draht auszubilden, während andere, eher sekundäre Leitungen als Leiterbahn ausgebildet sind, um Gewicht und besonders Platz einsparen zu können. Besonders vorteilhaft kann es auch sein, Erdungskabel als Draht auszubilden, um eine stabile Erdung und zugleich eine große Abschirmungsmöglichkeit für andere, benachbarte Leitungen zu erreichen.

Leiterbahnen sind aufgrund ihrer flachen Bauweise zunächst leichter zu durchtrennen und somit anfälliger in Bezug auf mechanische Zerstörung. Sind die Leiterbahnen allerdings zum Beispiel auf einem biegsamen Plattenmaterial aufgedruckt, kann ein mechanischer Bruch vermieden werden. Flächige Kontakte können darüber hinaus auch gut mit Leiterbahnen realisiert werden.

Damit ein elektrisches Signal ohne Störung oder Beiflussung durch die Leitung propagieren kann und auch selbst nicht andere Leitungen und die darin übertragenen Signale stört, kann wenigstens eine der Kommunikationsleitungen beziehungsweise Versorgungsleitungen geschirmt sein, wobei insbesondere wenigstens eine Erdleitung zur Abschirmung verwendet werden kann. Insbesondere können also wenigstens zwei der Kontaktleitungen oder Versorgungsleitungen gegeneinander geschirmt werden.

Grundsätzlich können die Kommunikationsleitungen, Versorgungsleitungen und Erdleitungen parallel entlang des Messbands angeordnet werden. Bei einer Weiterbildung der Erfindung kann als Abschirmung auch von einer parallelen Anordnung der Leitungen abgesehen werden. In diesem Fall können zwei Leitungen, zwei Kontaktleitungen oder zwei Versorgungsleitungen, eine Kontaktleitung und eine Versorgungsleitung oder auch eine Kontaktleitung oder eine Versorgungsleitung, mit einer Erdleitung verflochten werden. Diese Möglichkeit der Abschirmung ist besonders effektiv und kann darüber hinaus zu einer erhöhten Stabilität führen, da die miteinander verflochtenen Leitungen in Bezug auf Ausdehnungen und mechanische Bewegungen einen zusätzlichen Bewegungsspielraum besitzen. Denkbar ist es in ähnlicher Weise, Leiterbahnen mäanderartig übereinander anzuordnen und somit eine Abschirmwirkung ähnlich einer Verflechtung von Drähten zu erreichen.

Die Einzelleitungen, die in der Übertragungsvorrichtung geführt werden, können insbesondere zwei Versorgungsleitungen und zwei Leitungen zur Datenübertragung umfassen. Denkbar ist auch, eine Einzelleitung als Kommunikationsbus auszubilden, wobei sämtliche Busarten grundsätzlich eingesetzt werden können, also beispielsweise auch CAN-Bus oder RS-485. Die Kommunikationsleitungen können unidirektional oder auch bidirektional Daten übermitteln.

Eine besonders vorteilhafte Möglichkeit besteht darin, das Trägerband als Abschirmung zu verwenden. Insbesondere dann, wenn das Trägerband aus Metall ausgebildet ist, bietet es eine großflächige Abschirmung, die gegebenenfalls für die Gesamtheit der Leitungen (zumindest auf einer Seite) ausreicht. Ein aus Stabilitätsgründen ohnehin dick ausgebildetes Trägerband verstärkt die Abschirmwirkung. Das Trägerband kann zur Abschirmung geerdet werden.

Grundsätzlich bestehen zwei vorteilhafte Ausführungsformen, um eine gute Erdung des Messbandes gewährleisten zu können. Zum einen kann die Erdung an genau einer Stelle des Messbandes erfolgen, insbesondere im Bereich der oberen Aufhängung, wo das Messband ohnehin fest mit dem Gebäude beziehungsweise dem Aufzugschacht verbunden ist. Diese Maßnahme besitzt zunächst den Vorteil, dass weniger Ausgleichsströme zwischen unterschiedlichen Erdungspunkten fließen können. Ist nämlich eine zweite Erdung vergleichsweise weit entfern vorgesehen, kann es zu Ausgleichsströmen zwischen diesen beiden Punkten kommen, welche wiederum die Signalleitung beeinflussen können.

Eine Erdung alleine an einem Punkt ist jedoch in der Regel nicht ausreichend: Wird ansonsten keine weitere Erdung vorgenommen, so kann das lange Messband wie eine Antenne wirken und insbesondere hochfrequente elektromagnetische Signale auffangen. Um die Wirkung einer Antenne zu vermeiden, kann am anderen Ende des Messbandes, also bei vorliegender Ausführungsform am unteren Ende, dieses über eine Kapazität, einen sogenannten Entstörkondensator mit der Erde verbunden werden. Dieser Kondensator wirkt dann wie ein Bypass zur Ableitung hochfrequenter Schwingungen. Eine weitere vorteilhafte Möglichkeit besteht darin, mehrere Kontakte zur Erde herzustellen, die Strecke zwischen den einzelnen Verbindungen aber nicht zu groß zu wählen, also beispielsweise in Höhe der einzelnen Stockwerke. Ausgleichströme sind dann vernachlässigbar gering und beeinflussen die Signalleitung nicht.

Um zusätzliche Störung zu vermeiden, kann insbesondere eine galvanische Trennung zwischen den Kontaktleitungen und der anschließbaren Elektronik vorgesehen sein.

Um eine besonders effektive Abschirmung des Messbands zu erreichen, ist es möglich, einen Abschirmkäfig um das Messband herum anzuordnen. Der Käfig kann geerdet werden und somit wie ein faradayscher Käfig wirken, der somit auch die übertragungsvorrichtung umgibt und die Signalleitung von äußeren Einflüssen nach Möglichkeit freihält. Bei einem derartigen Abschirmkäfig handelt es sich um eine besonders vorteilhafte Abschirmung die sehr effektiv ist.

Grundsätzlich ist es auch denkbar, bei einer Ausführungsform der Erfindung ein elektrostritives Material einzusetzen, sodass bei Anlegung bestimmter Spannung sich eine Längenänderung des Messbandes einstellt. Diese Ausführungsform kann insbesondere dazu verwendet werden, einen Ausgleich bei einer Längenänderung, beispielsweise in Folge des Eigengewichts zu erreichen.

Das Messband kann im Zusammenhang mit mehreren Vorrichtungen bzw. Peripheriegeräten der Auf zugsvorrichtung verwendet werden, wie zum Beispiel der Positionsbestimmungsvorrichtung, einer Sicherungsvorrichtung oder einer Kommunikationsvorrichtung.

Insbesondere zeichnet sich somit eine erfindungsgemäße Positionsbestimmungsvorrichtung dadurch aus, dass zur Positionsbestimmung als Markierungen ein entsprechendes Messband verwendet wird.

Die Kommunikation- und Versorgungsleitung können im Zusammenhang mit einer Sicherungsvorrichtung eingesetzt werden. Die Sicherungsvorrichtungen überwachen einzelne Sensoren und Schalter und können somit auch auf den Antrieb der Fahrkabine einwirken und diesen kontrollieren. Die Fahrkabine kann beispielsweise nur dann in Bewegung gesetzt werden, wenn alle Türen ordnungsgemäß geschlossen sind, also sowohl die Schachttüren, die am Aufzugschacht selbst angebracht sind, als auch die Kabinentüren der Fahrkabine, die sich an der Fahrkabine befinden. Diese Informationen, ob zum Beispiel alle Türen geschlossen sind, können über das Messband übertragen werden und in jedem Stockwerk zur Verfügung stehen. Auch können Daten von einzelnen Stockwerken in diese Leitungen eingespeist werden, beispielsweise, ob eine bestimmte Schachttür ordnungsgemäß geschlossen ist und somit keine Gefahr besteht.

Bei einer Weiterbildung der Erfindung kann eine Sicherungsvorrichtung gemäß der Erfindung zusätzlich eine Testvorrichtung zum Testen des Messbandes auf Brüche oder Ausdehnungen hin vorsehen, indem zum Beispiel eine Laufzeitmessung eines Signals durch Leitungen des Messbandes durchgeführt wird oder eine Kapazitätsmessung des Messbandes erfolgt oder eine einfache Durchgangsprüfung für verschiedene Leitungen durchgeführt wird. Dadurch kann die Sicherheit erhöht werden, es besteht aber auch die Möglichkeit, die Instandhaltung und Wartung zu verbessern zu können, da entsprechende Fehler automatisiert getestet werden können.

Insbesondere können auch Verbindungen innerhalb einer Leitung beispielsweise zu einzelnen Stockwerken getestet werden und dazu eine Verbindungstestvorrichtung bei einer Ausführungsform der Erfindung vorgesehen sei. Auch dadurch kann die Sicherheit erhöht und die Wartung verbessert werden.

Ferner kann eine erfindungsgemäße Kommunikationsvorrichtung im Zusammenhang mit einem solchen Messband verwendet werden, da eine Kommunikation, insbesondere zwischen einzelnen Stockwerken in vorteilhafter Weise über ein solches Messband stattfinden kann.

Dementsprechend können derartige Ausführungsbeispiele einer erfindungsgemäßen Positionsbestimmungsvorrichtung, einer Sicherungsvorrichtung oder einer Kommunikationsvorrichtung in vorteilhafterweise in einer Aufzugvorrichtung gemäß der Erfindung eingesetzt werden, wobei sämtliche beschriebenen Vorteile des Messbandes in dieser Vorrichtung dort genutzt werden können.

### Ausführungsbeispiele:

Ausführungsbeispiele der Erfindung sind in den Zeichnungen dargestellt. Abgebildet sind sowohl das Messband als auch entsprechende Verbindungsvorrichtungen. Diese werden unter Angabe weiterer Einzelheiten und Vorteile näher erläutert.

Im Einzelnen zeigen:
- Fig. 1: eine schematische Darstellung eines Aufzugsschachts mit Messband,
- Fig. 2: ein Messband mit Leitungen,
- Fig. 3: ein Querschnitt eines Messbands,
- Fig. 4: ein Messband mit Erdungsanschlüssen und Entstörkondensator,
- Fig. 5: ein Messband mit Erdungsanschlüssen,
- Fig. 6: eine parallele Leitungsführung im Messband,
- Fig. 7: eine verflochtene Leitungsführung,
- Fig. 8a: mäandrierende Leiterbahnen,
- Fig. 8b: mäandrierende Leiterbahnen (Draufsicht),
- Fig. 9: eine Verbindungsvorrichtung mit Unterbrechungskontakt,
- Fig. 10: eine Crimpvorrichtung,
- Fig. 11: federgespannte Kontaktpins,
- Fig. 12: eine kapazitive Verbindung,
- Fig. 13: eine einschlaufige induktive Verbindung,
- Fig. 14: eine mehrschlaufige induktive Verbindung,
- Fig. 15: eine Steckerkontaktierung am Messband,
- Fig. 16: ein Sicherheitssystem mit Bus,
- Fig. 17: ein Positionssensor ah der Fahrkabine beim Auslesen eines Messbands / Codebands,
- Fig. 18: ein optischer Schalter,
- Fig. 19: eine Verbindungsvorrichtung mit beweglicher Kontaktierung, sowie
- Fig. 20: eine Verbindungsvorrichtung mit beweglicher Kontaktierung (Draufsicht).

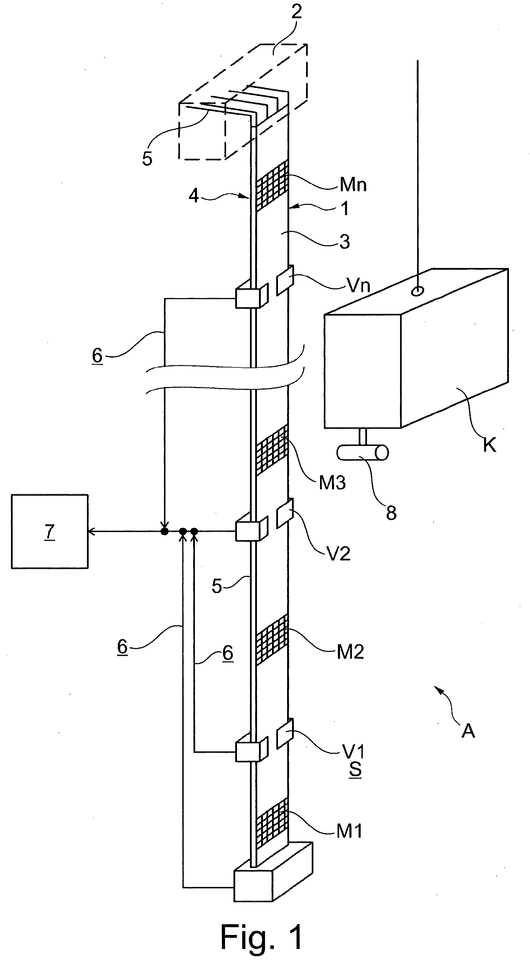

Figur 1 zeigt eine Aufzugsvorrichtung A mit einem Aufzugsschacht S, in dem eine Fahrkabine K verfahrbar gelagert ist. Entlang des Aufzugsschachts ist ein Messband 1 hängend angeordnet. Das Messband 1 ist lediglich an seinem oberen Ende über eine Montagevorrichtung 2 befestigt. Auf der vorderen, der Kabine K zugewandten Seite 3 befindet sich eine Markierungseinheit mit mehreren Markierungen M1, M2, M3, Mn. Auf dem vorderen Bereich 3 des Messbandes 1 befindet sich eine Reflexionsschicht, die sich über das gesamte Messband 1 der Länge nach erstreckt. Die Markierungen M1, M2, M3, Mn sind als aufgedruckte 2D-Codes ausgebildet.

Die Markierungen M1, M2, M3, Mn sind verschlüsselt, sodass eine Positionsbestimmungsvorrichtung den speziellen Schlüssel zur Entschlüsselung / Dekodierung dieser sensorisch erfassten Markierungen benötigt, um die codierten Daten gewinnen zu können. Im vorliegenden Fall ist über die Markierung M1, M2, M3, Mn die Position der entsprechenden Aufzugkabine K im Schacht S markiert. Befindet sich die Kabine K an einer entsprechenden Stelle und liest deren Sensor beispielsweise die Markierung M2 aus, so entspricht die kodierte Positionsangabe auf der Markierung M2 der aktuellen Position der Aufzugkabine K.

Auf der Rückseite, das heißt der der Kabine K abgewandten Seite 4 des Messbands 1 befinden sich Kommunikationsleitungen 5, über welche Informationen übermittelt werden können. Diese Kommunikationsleitungen 5 verlaufen entlang der gesamten Länge des Messbands 1 von oben nach unten. In Höhe der einzelnen Stockwerke sind zudem Verbindungsvorrichtungen V1, V2, Vn angeordnet, d.h. auf jedem Stockwerk befindet sich eine dieser Verbindungsvorrichtungen V1, V2, Vn. Die Markierungen M1, M2, M3, Mn müssen nicht voneinander beabstandet angeordnet sein, sondern es ist auch denkbar, jede Markierung unmittelbar an die vorangegangene anzuschließen. Es kann vielmehr vorteilhaft sein, die Markierungen über die Länge des Schachts S bzw. über die Länge des Messbands 1 hinweg "kontinuierlich" anzuordnen, sodass an jeder Stelle die aktuelle Position ausgelesen werden kann.

Denkbar ist darüber hinaus, dass bestimmte Positionen im Schacht gesondert markiert bzw. kodiert sind. Beispielsweise existieren so genannte "Sicherheitszonen" um jeden Stockwerkszugang im Schacht bzw. um jede Schachtöffnung herum. Muss der Aufzug innerhalb einer dieser Sicherheitszonen anhalten, beispielsweise in einem Notfall, so können die Türen geöffnet werden, obschon sich die Kabine nicht in der vorgeschrieben Ausstiegsposition eines Stockwerks (z.B. mit dem Kabinenboden bündig an der Schachtöffnung) befindet. In dieser Notsituation ist aber ein Ausstieg in der Sicherheitszone möglich und somit unbedingt von der Sicherheitsvorrichtung des Aufzugs zuzulassen, indem z.B. die Türen der Kabine entriegelt werden können.

Die Verbindungselemente V1, V2, Vn besitzen Kontaktierungen zu den Kommunikationsleitungen 5. Über diese Kontaktierungen werden Leitungen 6 an eine Elektronikeinheit 7 weitergeführt. Bei der Elektronikeinheit 7 handelt es sich vorliegend um eine Sicherungsvorrichtung, die beispielsweise überwacht, ob die Aufzugtüren, zum Beispiel die Schachttüren, die am Aufzugschacht S angebracht sind oder die Kabinentüren an der Kabine K während der Fahrt ordnungsgemäß geschlossen oder beim Ausstieg geöffnet sind oder ob eine Störung beispielsweise durch Blockade einer Tür vorliegt.

An der Kabine K ist ein optischer Sensor 8 angeordnet, welcher der Auslesung der Marierungen M1, M2, M3, Mn dient und die gewonnenen Daten an eine Positionsbestimmungsvorrichtung weiterleitet.

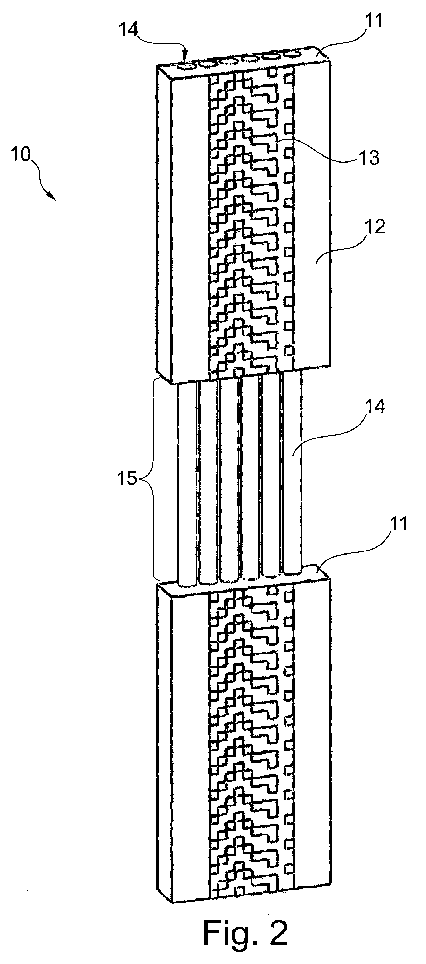

Figur 2 zeigt eine schematische Darstellung eines Messbands 10 mit einem Trägerband 11. Auf dem Messband 10 sind die beiden Seitenränder an der Vorderseite frei gelassen, während mittig ein Markierungsstreifen 13 angebracht ist, der eine Reflexionsschicht mit darauf aufgedrucktem 2D-Code als Markierung umfasst. Das Trägerband 11 selbst ist als Stahlband ausgebildet. Im Trägerband 11 sind Kommunikationsleitungen 14 eingebettet, die aus elektrisch leitenden, gegenüber dem Stahlband jedoch isolierten Drähten besteht. Diese verlaufen bei der Ausführungsform gemäß Figur 2 parallel. Zur übersichtlichen Darstellung sind im Bereich 15 die Leitungen 14 ohne Trägerband eingezeichnet. Der Seitenbereich 12 ist deshalb freigelassen, damit er dort von der Lagerung teilweise umgriffen werden kann, ohne dass der Markierungsstreifen 13 verdeckt ist. Um die Markierungen bzw. den 2D-Code 13 auslesen zu können, muss ein entsprechender Codierungsschlüssel in der Positionsbestimmungsvorrichtung hinterlegt sein.

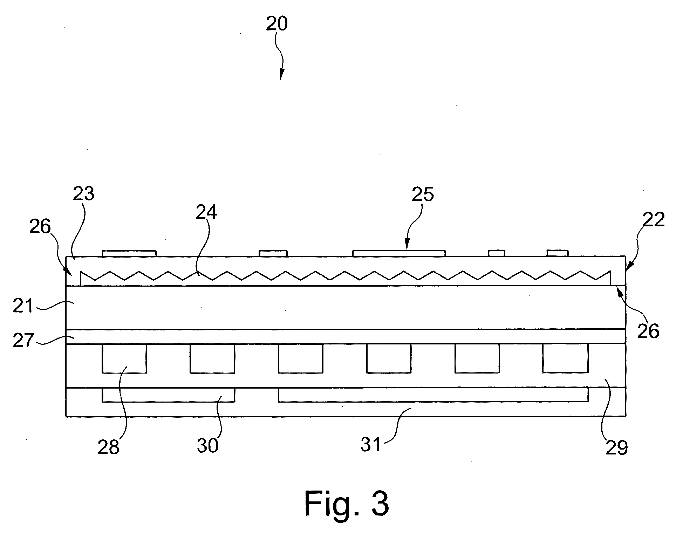

Figur 3 zeigt eine detaillierte Darstellung eines Aufbaus eines derartigen Messbands 20. Als Grundbestandteil besitzt dieses Band 20 ein Trägerband 21, welches aus Stahl ausgebildet ist. An der in Figur 3 oberen Seite des Trägerbands 21 befindet sich die Markierung 22, die wiederum zunächst eine durchsichtige Kunststoffschicht 23 an der Oberfläche besitzt. Zwischen dem überwiegenden Teil der Kunststoffschicht 23 und dem Trägerband 21 ist eine Art Luftpolster 24 angeordnet. Zum Luftpolster 24 hin ist die Kunststoffschicht 23, die in der Regel aus Polyester oder Polycarbonat besteht, gezackt ausgebildet. Auf der äußeren Oberfläche der Kunststoffschicht 23 wiederum befinden sich Code-Aufdrucke 25 zur Codierung von Positionsangaben. Im Randbereich 26 ist die Kunststoffschicht 23 am Trägerband 21 befestigt. Das Luftpolster 24 ist notwendig, damit Licht, das beispielsweise von einem optischen Sensor der Aufzugskabine durch den transparenten Kunststoff 23 hindurch gelangt, an der zackenartigen Grenzfläche zwischen Kunststoffschicht 23 und Luftpolster 24 reflektiert und zurückgeworfen wird. Fällt das Licht hingegen auf einen Codedruck 25, wird es weitgehend absorbiert. Auf diese Weise wird der Code ausgelesen und erfasst.

Auf der anderen Seite des Trägers ist zunächst eine Isolierschicht 27 angeordnet. Unmittelbar an dieser Isolierschicht 27 befinden sich Kupfer- oder Aluminiumleitungen 28. Diese Leitungen 28 wiederum sind von einem Isolator 29 abgedeckt. Die Leitung 28 ist somit zwischen Isolatoren 27, 29 eingebettet. Auf dem Isolator 29 wiederum befinden sich aufgedruckte Leiterbahnen 30, die wiederum von einer Isolatorschicht 31 abgedeckt wird. Das Messband umfasst also auf seiner Markierungsseite ein Reflexionsband, wobei zur Markierung lediglich einige Bereiche, die eine Codierung darstellen, durch schwarze Bereiche (Bedruckungen) abgedeckt sind. Auf der Markierungsseite des Messbands kann es vorteilhaft sein, lediglich, einen mittleren Streifen entlang der Länge des Messbands mit den Markierungen zu versehen und die Seitenbereiche zumindest teilweise freizulassen. Diese Maßnahme ist deshalb vorteilhaft, weil das Messband meistens nicht starr in regelmäßigen Abständen befestigt ist, sondern im oberen Bereich des Schachts aufgehängt wird und ansonsten beweglich gelagert wird. Diese Lagerung kann vorteilhafterweise durch eine teilweise Umklammerung erfolgen, sodass das Codetape an den Rändern umgriffen wird, die Umklammerung jedoch das Messband nicht vollständig umgibt sondern einen offenen Spalt lässt. Aus Symmetriegründen kann dieser somit in der Mitte des Messbands liegen.

Gerade dann, wenn neue Gebäude gebaut werden, macht sich der Effekt bemerkbar, dass diese sich mit der Zeit "setzen", das heißt, ihre Höhe verringert sich geringfügig mit der Zeit. Wäre das Messband in regelmäßigen Abständen fixiert, so würde es sich wellenartig abheben, wenn das Gebäude sich in seiner Höhe verkürzt bzw. gestaucht wird. Ist das Messband jedoch beweglich gelagert, so kann es sich in den Lagerungshalterungen bewegen, und die Halterung muss nicht geöffnet werden, und das Messband muss auch nicht neu einjustiert werden. Die vorgegebenen Randbereiche können etwa für einzelne Markierungen, wie beispielsweise zur Markierung von Sicherheitszonen, um jeden Etagenausstieg herum, genutzt werden, zumal in diesem Fall auch keine durchgehende, ununterbrochen Markierung notwendig ist, die von einer Lagerung verdeckt werden könnte.

Die Reflexion kann durch Rückreflektoren im Reflexionsband erreicht werden, beispielsweise auch durch kleine spiegelnde Kugel oder durch die Anordnung von Prismen. Auch die Anbringung gekrümmter Spiegel ist grundsätzlich möglich.

Das Trägermaterial 21, das vorwiegend aus Stahl ausgebildet ist, garantiert einerseits eine hohe mechanische Stabilität. Zudem kann es auch glasfaserverstärkt sein oder kohlefaserverstärkt, Diese Verstärkung ist insbesondere vorteilhaft, weil das sehr lange Messband auch ein nicht unerhebliches Gewicht aufweisen und sich deshalb mit der Zeit ebenfalls noch einmal strecken kann. Diese Ausdehnung des Messbands kann dadurch reduziert werden. Insgesamt muss das Messband jedoch ohnehin einigen Belastungen im Aufzugschacht S standhalten können, nämlich zum einen den dort herrschenden Temperaturen und Temperaturunterschieden, der Feuchtigkeit, dem Staub, Korrosion, insbesondere durch Feuchtigkeit, mechanischer Abrieb sowie Wind. Die einzelnen Schichten, Bedruckungen usw. können auf verschiedenste Art und Weise miteinander befestigt werden, beispielsweise durch Laminieren, Kleben, Löten, durch Verschweißen oder durch sonstige Methoden zur Herstellung einer Verbindung. Insbesondere können Schichten oder Markierungen auch aufgedruckt werden.

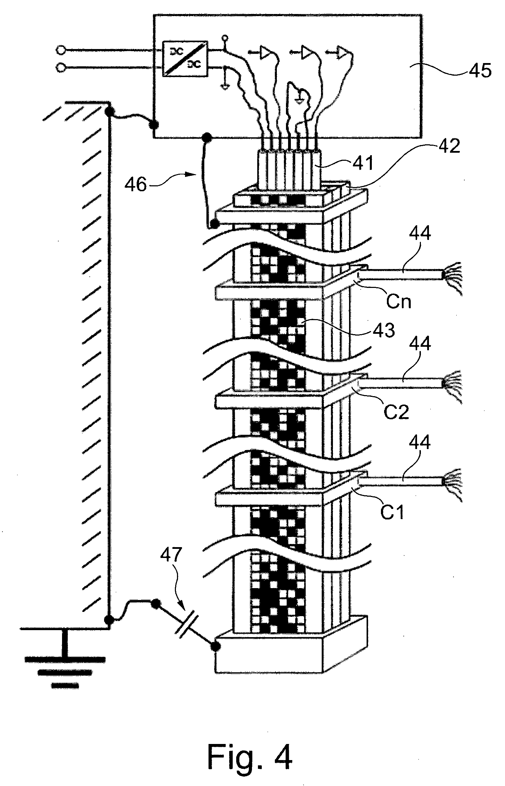

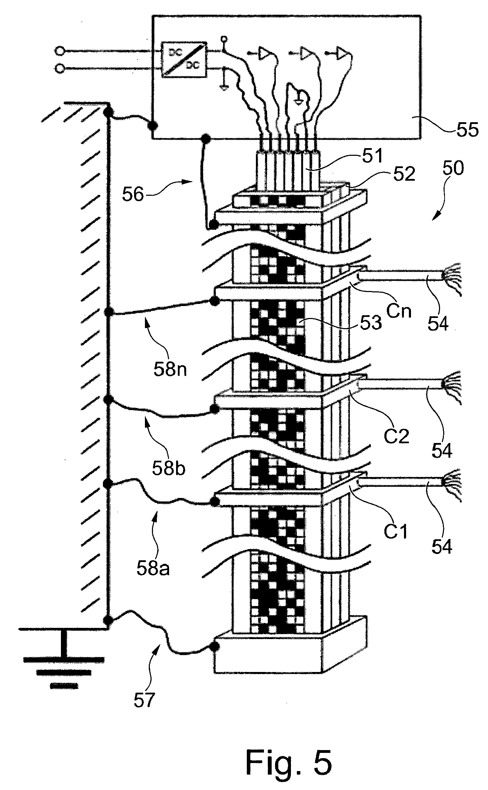

Figur 4 und Figur 5 zeigen Möglichkeiten, eine Erdung herzustellen bzw. Abschirmungen zu bewirken. Figur 4 zeigt eine schematische Darstellung eines Messbands 40 mit Kommunikationsleitungen 41. Im Außenbereich befindet sich ein Metallkäfig 42, der das Messband mit seinen Leitungen 41 umschließt. Zudem ist außen ein Markierungsstreifen 43 vorgesehen. In Höhe jeder einzelnen Etage befindet sich ein Verbindungsclip C1, C2, Cn, der gleichzeitig Kontaktierungen zu den Leitungen 41 bereitstellt, sodass entsprechende Verbindungsleitungen 44 jeweils von den Clips C1, C2, Cn herausgeführt werden können. Die Kommunikationsleitungen 41 können parallel angeordnet sein oder miteinander jeweils paarweise verflochten werden, um eine Abschirmung zu erreichen. Bei parallel angeordneten Leitungen ist ein Erdungskabel jeweils zwischen den einzelnen Kommunikationsleitungen angeordnet. Die Kommunikationsleitungen wiederum sind galvanisch von der Elektronik getrennt, mit der sie über die Leitung 44 verbunden sind. Auch im oberen Bereich des Aufzugsschachts sind die Kommunikationsleitungen 41 über eine galvanische Trennung 45 mit weiterer Elektronik verbunden. Am oberen Ende des Messbands ist der Metallkäfig über eine Erdungsleitung 46 geerdet. Im unteren Bereich ist der Metallkäfig über einen Kondensator 47 mit der Erde verbunden. Der Kondensator 47 wird auch als Entstörkondensator bezeichnet. Dieser Kondensator 47 stellt eine Art Bypass dar, um hochfrequente Schwingungen abzuleiten, da ohne Entstörkondensator das Messband 40 wie eine Antenne wirken könnte.

Figur 5 zeigt ein ähnliches Messband 50 mit Kommunikationsleitungen 51, einen Metallkäfig 52, einzelnen Clips C1, C2 und Cn zur Kontaktierung der Leitungen 51. Im äußeren Bereich ist ferner eine durchgehende Markierung 53 entlang der Länge des Messbands 50 angebracht. Über die Clips C1, C2, Cn werden die kontaktierten Leitungen 51 über Kabel 54 nach außen geführt und mit weiterer Elektronik verbunden. Die Leitungen 51 können ebenfalls parallel mit Erdungskabeln zur Abschirmung dazwischen angeordnet werden oder aber paarweise verflochten werden, sodass kein interner "Cross-Talk" entsteht, das heißt, die Leitungen sich bei der Signalleitung nicht gegenseitig beeinflussen. Im oberen Bereich sind die Kommunikationsleitungen 51 wiederum über eine galvanische Trennung 55 mit weiterer Elektronik verbunden bzw. mit einer Spannungsquelle, sofern auch Leitungen zur Stromversorgung innerhalb der Leitungen 51 vorgesehen sind.

Im vorliegenden Fall nach Figur 5 ist nicht nur am oberen Ende des Messbands 50 eine Erdung des äußeren Metallkäfigs 52 über eine Erdungsverbindung 56 vorgesehen, sondern unter anderem auch im Endbereich, nämlich über die Leitung 57. Entstörkondensatoren sind nicht vorgesehen. Damit jedoch keine Ausgleichsströme fließen, weil die Erdung an unterschiedlichen Stellen des Messbandes angebracht sind, die wiederum weit auseinander liegen, ist eine Erdung an jedem Clip C1, C2, Cn in Höhe jedes Stockwerks vorgesehen, und zwar über die entsprechenden Leitungen 58a, 58b, 58n.

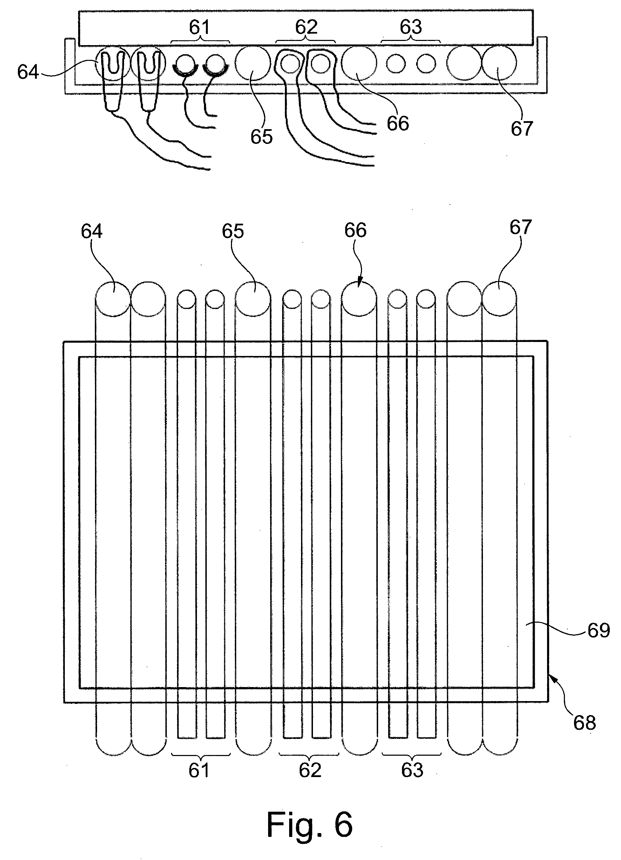

Figur 6 zeigt mehrere Kommunikationsleitungskabel bzw. Stromleitungskabel-Paare 61, 62, 63, welche entlang der länge des Messbands parallel angeordnet sind und durch Erdungskabel 64, 65, 66, 67 voneinander abgeschirmt werden. Zudem ist eine Abdeckung 68 über den einzelnen Kabeln angebracht, die ebenfalls metallisch sein kann und mit der Erde verbunden ist, um eine Abschirmung zu erreichen. An einer Stelle ist in dieser Abdeckung 68 ein Schlitz 69 angeordnet, in dessen Bereich also eine Kontaktierung bzw. ein Zugang unmittelbar möglich ist.

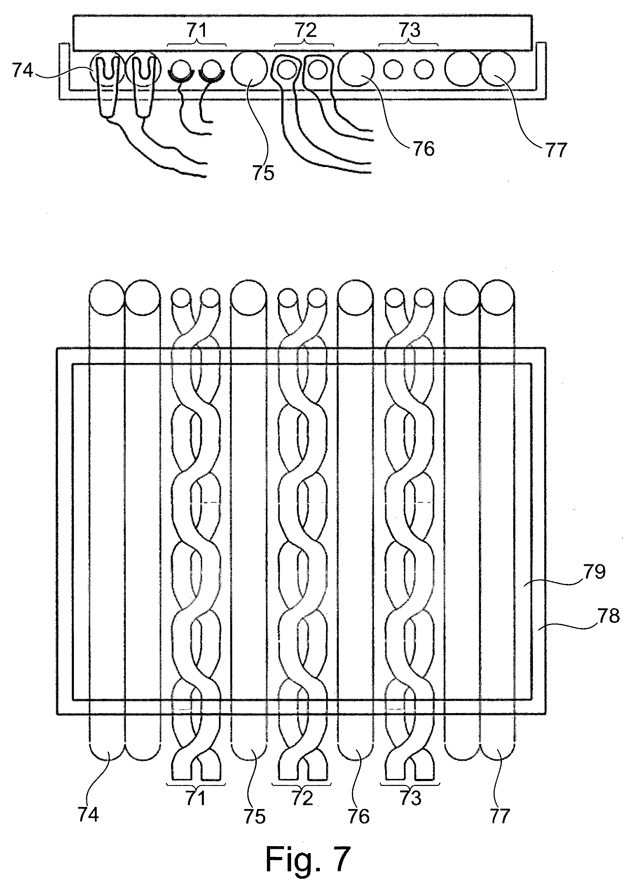

Figur 7 zeigt eine analoge Anordnung von Kabelpaaren 71, 72, 73, wobei die jeweiligen Paare 71, 72, 73 miteinander verflochten sind und so eine Abschirmung erreicht wird. Zusätzlich sind zwischen den einzelnen Paaren 71, 72, 73 Erdungskabel 74, 75, 76, 77 angeordnet. Über den Kabeln befindet sich ebenfalls eine geerdete Abdeckung 78 mit einer Aussparung 79, über die eine Kontaktierung erfolgen kann.

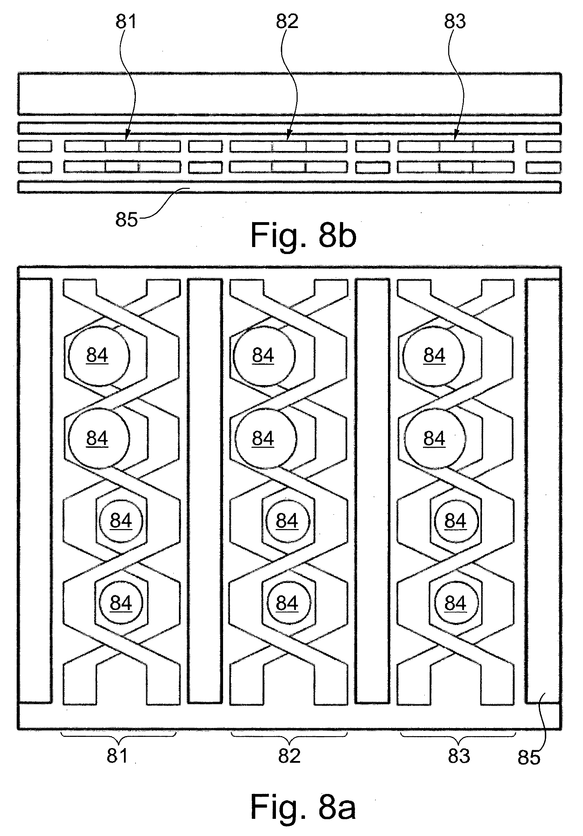

Die Figuren 8a und 8b zeigen ebenfalls Leitungspaare 81, 82, 83, die als Leiterbahnen (zum Beispiel aufgedruckt) ausgebildet sind. Analog zu einer verflochtenen Anordnung gemäß Figur 7 sind diese Leiterbahnen 81, 82, 83 mäandrierend angeordnet. Die Leiterbahnen können so gedruckt werden, dass sie mäanderartig sich jeweils kreuzen. Unterschiedliche Leiterbahnen können unmittelbar nebeneinander angeordnet werden oder in unterschiedlichen Schichten jeweils aufeinander liegen. Die Verflechtung von Leiterbahnen kann so erfolgen, dass bei drei Leiterbahnen diese ähnlich wie ein Zopf miteinander verflochten sind, sodass zwei unterschiedliche Leiterbahnen eine Art Bauch nach außen hin über der Längsrichtung darstellen und in der Mitte eine Kontaktierungsmöglichkeit 84 (zur mittleren Leiterbahn) geschaffen wird. Im äußeren Bereich können die Leiterbahnen wiederum von einem geerdeten Käfig 85 umschlossen und abgeschirmt werden. Figur 8b zeigt eine analoge Darstellung eines Querschnitts in Draufsicht auf ein entsprechendes Messband.

Grundsätzlich können die entsprechenden Leiterbahnen durch sogenannte "VIAs" kontaktiert werden.

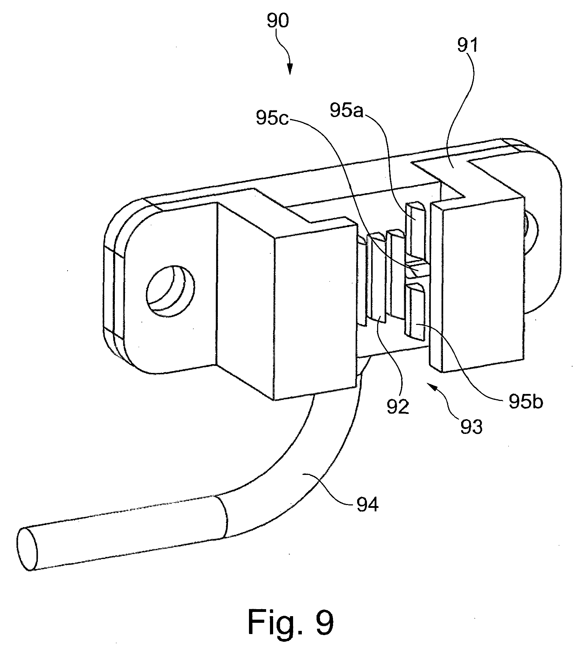

Figur 9 zeigt eine Verbindungsvorrichtung 90 mit einer an der Schachtwand anschraubbaren äußeren Klammervorrichtung 91, welche das Messband teilweise umgreifen kann sowie ferner mit Kontaktierungselektroden 92, die als Schneidkontakte ausgebildet sind. Die Klammer 91 besitzt eine Aussparung 93, welches ermöglicht, dass die Markierungen, die auf einer Seite des Messbands angebracht sind, durch einen optischen Sensor an der Kabine ausgelesen werden können. Die Kontakte 92 sind über ein Kabel 94 nach außen geführt, beispielsweise zur Elektronik einer Sicherungsvorrichtung. Die Verbindungskontakte 95a, 95b sind ebenfalls als Schneidkontakte ausgebildet. Die Schneide 95c ist ein Isolator, die elektrische Leitung des Messbandes durchtrennt. Vor und hinter der Unterbrechung erfolgt sodann eine Kontaktierung über die Schneidkontakte 95a, 95b. Diese sind an eine Sicherheitselektronik angeschlossen und überbrücken im Normalbetrieb die Unterbrechung. Nur bei einem entsprechenden Defekt erfolgt sodann tatsächlich eine Unterbrechung. Diese Unterbrechung führt zu einer Abschaltung im Sicherheitskreis, wodurch zum Beispiel der Antrieb des Aufzugs unterbrochen wird. Es handelt sich also um eine Fail-Safe-Schaltung zur Erhöhung der Sicherheit.

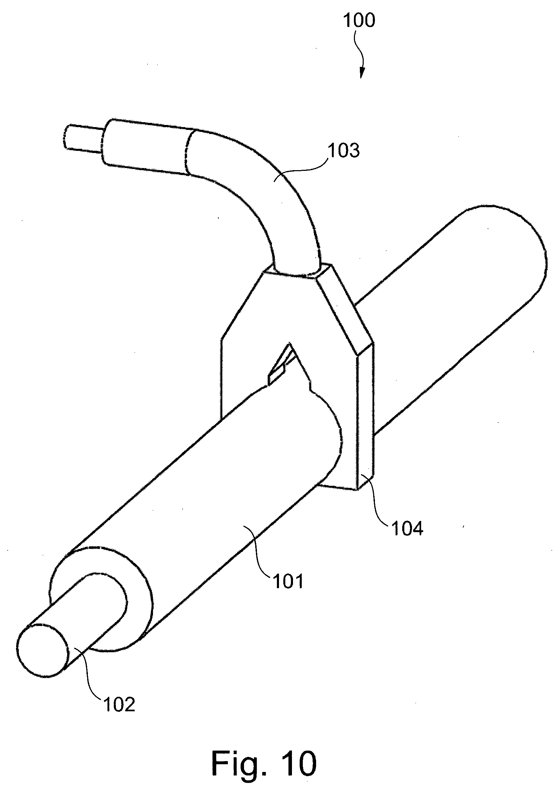

Figur 10 zeigt eine Kontaktierungsmöglichkeit. Dargestellt ist zunächst eine Kommunikationsleitung 100, die entlang eines Messbandes angeordnet ist. Diese umfasst im äußeren Bereich eine Isolierung 101 sowie einen Leiterdraht 102, welcher in der Mitte der Leitung 100 angeordnet ist. Zur Verbindung des Drahtes 102 mit einem Kabel 103 ist ein Schneidkontakt 104 am Kabel 103 angebracht, dessen Schneiden die Isolierung 101 durchtrennen können und zumindest im Randbereich auch teilweise in das Material des Drahtes 102 eindringen. Dadurch wird eine besonders stabile und zuverlässige elektrische Verbindung hergestellt.

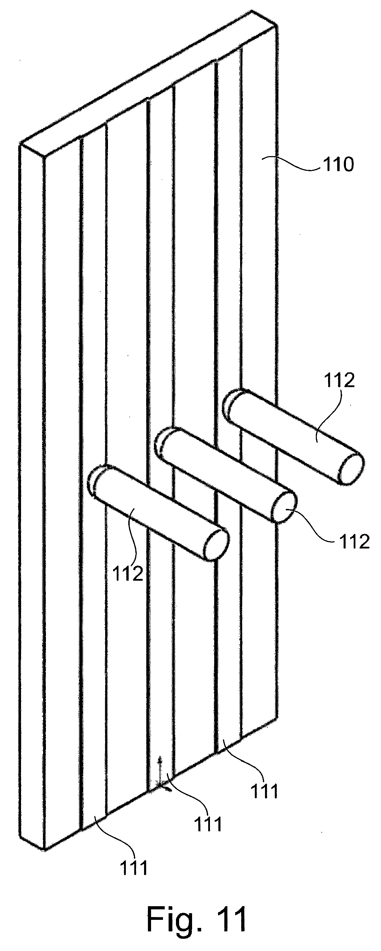

Figur 11 zeigt ein Messband 110, auf dem Leiterbahnen 111 aufgedruckt sind. Diese werden über federgespannte Kontaktpins 112 kontaktiert. Diese Pins erhalten also durch eine auf Druck gespannte Feder eine Anpresskraft, welche dafür sorgt, dass ein stabiler Kontakt zwischen Pin und Leiterbahn 111 hergestellt wird.

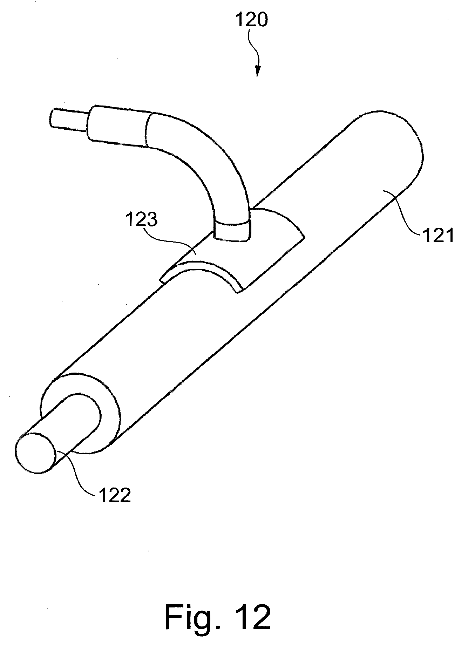

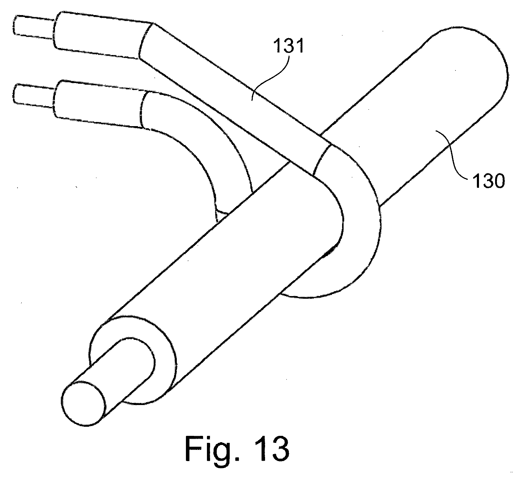

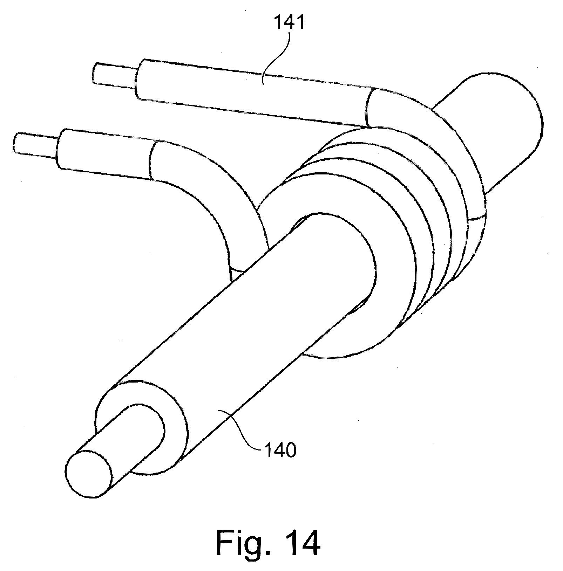

Daneben bestehen zum Beispiel Möglichkeiten, eine drahtlose Verbindung herzustellen. Figur 12 zeigt eine kapazitive Verbindung einer Leitung 120 mit einer Isolierung 121 und einem Leitungsdraht 122. Im äußeren Bereich der Isolierung 121 ist eine Art Schelle 123 vorgesehen, welche die Leitung 120 teilweise umkreist. Die Schelle 123 wirkt also wie eine Kondensatorplatte, sodass eine kapazitive Verbindung zwischen der Schelle 123 und dem Draht 122 bewirkt wird. Die Figuren 13 und 14 stellen induktive Kopplungen dar, indem jeweils die Leitung 131 um die Leitung 130 bzw. die Leitung 141 um die Leitung 140 gewickelt wird.

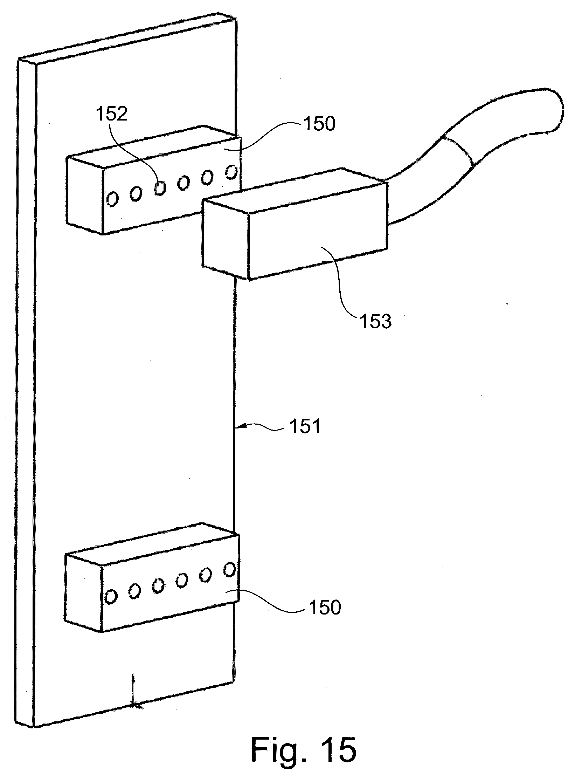

Eine besonders elegante Verbindung ist in Figur 15 dargestellt. In ähnlicher Weise sind im Erdungskäfig regelmäßig Aussparung zur Kontaktierung vorgesehen sein können, ist es auch möglich, vorgefertigte Steckdosen 150 in regelmäßigen Abständen, zum Beispiel in Zwei-Meter-Abständen anzuordnen. Denkbar ist auch, diese jeweils auf jedem Stockwerk anzubringen. Über diese Steckdosen 150 sind die einzelnen Leitungen in einem Messband 151 jeweils kontaktierbar, da jeder weibliche Verbindungsanschluss 152 bereits mit einer entsprechenden Leitung im Messband 151 vorkontaktiert ist. Zur Kontaktierung ist dann noch ein Stecker 153 notwendig, der an der entsprechenden Stelle eingesteckt werden kann. Die Steckdosen 150 können gegebenenfalls eine Abdeckung besitzen, die abnehmbar oder aufklappbar ist, falls diese nicht benötigt werden und somit vor Verschmutzung geschützt werden sollen. Derartige Steckdosen 150 besitzen aber auch den Vorteil, dass sie für Stabilität des Bandes insbesondere gegen Torsionen entlang der Längsachse schützen können. Die Steckdose 150 kann so ausgebildet sein, dass sie beispielweise von einem optischen Kamerasystem der Fahrkabine erfasst werden kann, beispielsweise, indem sie selbst entsprechende Markierungseinheiten aufweist. Zusätzlich können auch andere optische Indikatoren, wie beispielsweise Leuchtdioden (LED) vorhanden sein, welche anzeigen, ob ein Anschlussstecker 153 in einer der entsprechenden Steckdosen 150 eingesteckt ist. Jeder Steckdose 150 kann eine eigene Adresse zugeordnet werden. Die Steckdose kann auf dem Messband geklemmt, geklebt, festgelötet, geschraubt, geclipt oder in sonstiger Weise verbunden sein.

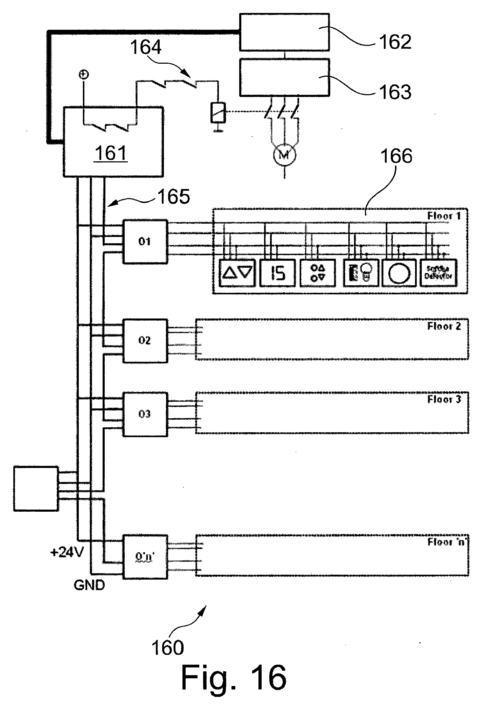

Figur 16 zeigt beispielsweise eine entsprechende Sicherheitsvorrichtung 160, welche einen Sicherheitscontroller 161 aufweist, der mit der Aufzugsteuerung 162 verbunden ist und somit unmittelbar den Antrieb des Aufzugs 163 kontrollieren kann. Insbesondere kann der Sicherheitscontroller 161 über einen Notschalter 164 den Antrieb des Aufzugs unmittelbar abschalten. Jedem Stockwerk ist ein optischer Schalter O1, 02, 03, On vorgesehen, der beispielsweise über eine Busleitung mit weiteren Komponenten verbunden sein kann, beispielsweise mit einer Positionsangabe oder mit Bedienschaltern des Aufzugs. Der optische Schalter O1, 02, 03, On zeigt jeweils an, ob zum Beispiel eine Schachttür geöffnet oder geschlossen ist. Diese entsprechenden Busleitungen, aber auch Stromleitungen und Erdungsleitungen 165 können entsprechend über ein Messband gemäß der Erfindung über die gesamten Stockwerke geführt werden.

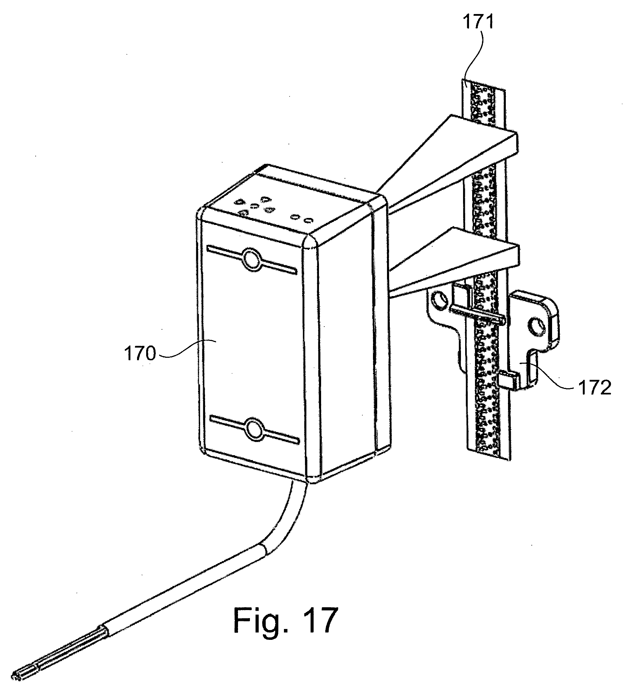

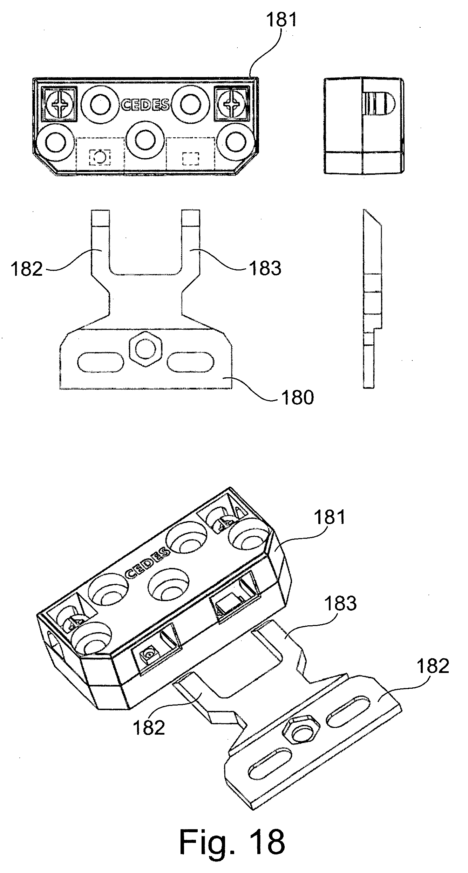

Figur 17 zeigt einen an einer Fahrkabine angeordneten Sensor 170, der eine Lichtquelle und einen optischen Empfänger umfasst, mit dem ein Messband 171, das eine Markierung trägt, ausgelesen werden kann. Des Weiteren sichtbar ist eine Lagerung 172 zur beweglichen Lagerung des Messbandes 171. Die in Figur 16 dargestellten optischen Schalter sind im Detail in Figur 18 noch einmal genauer dargestellt. Beim Schließen eines Kontaktes greift eine Kontaktbrücke 180 in den entsprechenden Schlitz eines Hauptkörpers 181 ein. Die beiden Schenkel 182 und 183 der optischen Brücke 180 stellen jeweils einen Lichtsender und einen Lichtempfänger dar, während im Hauptkörper 181 ein Lichtleiter angeordnet ist, sodass nur dann, wenn die Brücke 180 korrekt in die Vorrichtung 181 eingreift, eine optische Leitung von 182 nach 183 stattfinden kann. Nur unter dieser Bedingung ist der Schalter "geschlossen", was beispielsweise bedeutet, dass sicher festgestellt werden kann, dass eine Tür an einem Aufzug tatsächlich geschlossen ist.

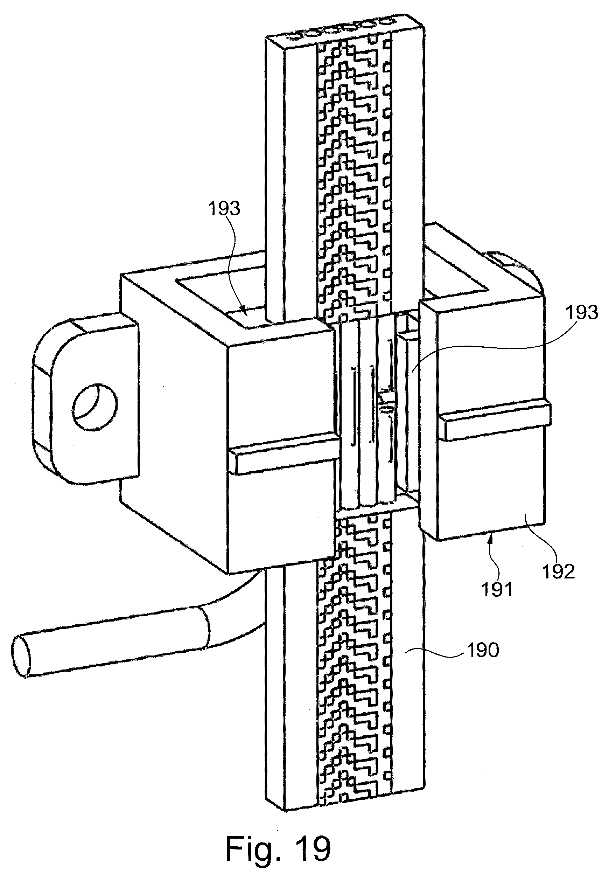

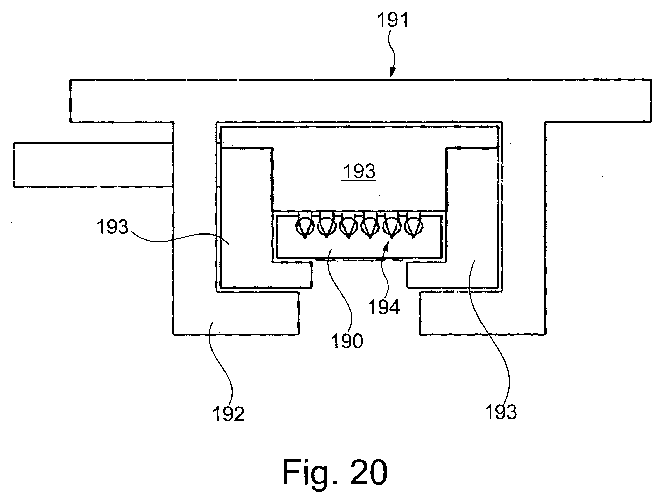

Figur 19 zeigt ein Messband 190 mit einer Verbindungsvorrichtung 191 mit einer beweglich in einer Halterung 192 gelagerten Kontaktierungsvorrichtung 193, durch welche die Leitungen im Messband (fest) kontaktiert werden können (über Schneidkontakte 194), wobei Gebäudeveränderungen, bedingt durch das Sich-Setzen des Gebäudes mit der Zeit aufgefangen werden können: Das Messband 190 bewegt sich relativ zur Schachtwand und nimmt dabei die Kontaktierungsvorrichtung 193 mit, bewegt sich also relativ zur Schachtwand und somit zur Halterung 192. Figur 20 zeigt eine Draufsicht auf die Vorrichtung gemäß Figur 19.

Bei weiteren Ausführungsformen ist es denkbar, dass die Verbindungsvorrichtung über der Markierung liegen kann und diese verdeckt, nämlich dann, wenn die Verbindungsvorrichtung selbst als Markierungseinheit vorgesehen ist und Informationen enthält, die beispielsweise an ihrer Außenseite angebracht sind. Dabei kann es sich insbesondere um Positionsangaben handeln. Zur Informationsübertragung und Kommunikation sind verschiedene Übertragungsmöglichkeiten denkbar. Insbesondere können auch verschiedene Bussysteme eingesetzt werden. Es ist sowohl ein unidirektionaler als ein bidirektionaler Kommunikationsbus denkbar.

Denkbar ist auch, Drähte mit geringem ohmschem Widerstand entlang des Messbands anzuordnen, indem entweder sehr gut leitende Metalle verwendet werden, oder aber, indem Drähte mit großem Querschnitt verwendet werden. Insbesondere dann, wenn die Drähte zur Stromversorgung dienen, kann diese Maßnahme von Vorteil sein, weil die Drähte dann einen geringeren Eigenwiderstand besitzen und die Verluste geringer sind.

Die Anzahl der Leitungen kann unterschiedlich gewählt werden, etwa 2, 5 oder sogar mehr. Zwei Leitungen können zur Stromversorgung verwendet werden und Abgriffe einer Spannungsquelle darstellen, mindestens ein Leiter kann als Erdung vorgesehen sein, zwei weitere Kabel können zur Kommunikation dienen. Wenigstens einer der Drähte kann in vorteilhafter Weise mit einer Sicherheitsvorrichtung verbunden werden. Als Gusssystem kann ein CAN-Bus oder ein RS-485-Bus verwendet werden. Zu Kommunikationen können auch die Hauptstromleitungen verwendet werden, wenn die Signale aufmoduliert werden. Als Modellierung kann AM, FM, ASK, FSK, PSK, QPSK, QQPSK, M-PSK, pi/4-PSK, MSK, GMSK oder andere Modulationsmethoden verwendet werden. Die Kommunikation kann grundsätzlich auf analogen oder digitalen Wegen erfolgen.

Die zur Abschirmung verflochtenen Leitungspaare können zum Beispiel eine 100-Ohm-Impedanz aufweisen.

### Besonders bevorzugte Ausführungsformen von Messbändern:

Bei einer besonders bevorzugten Ausführungsform ist eine erste Schicht vorhanden, welche die Oberfläche vor Verschmutzungen, Kratzern oder sonstigen mechanischen Einwirkungen schützt und einen aufgedruckten Code zur Positionsbestimmung umfasst. Dahinter befindet sich eine für Infrarot transparente Schicht, die insgesamt wie ein Reflektor wirkt (indem die entsprechende Oberfläche auf der ihnen zugewandten Seite eine reflektierende Grenzflächenschicht besitzt). Das gesamte Messband bzw. Codetape besitzt ein Trägerband, das aus Metall oder einem verstärkten Material besteht, um mechanische Stabilität zu gewährleisten. Der Verstärkungsgrad und die Art der Verstärkung hängen von der Länge des Messbands ab. Die Leitungen sind als Kabel ausgebildet und paarweise miteinander verflochten, sodass auf diese Weise eine Abschirmung erreicht werden kann. Zusätzlich sind metallische oder in sonstiger Weise leitende Ummantelungen vorgesehen. Schichten, die zur mechanischen Verstärkung dienen, können auch zur Abschirmung oder beispielsweise als Träger für den aufgedrückten Positionscode oder als Reflektorschichten dienen. Die unterschiedlichen Schichten werden aufeinander laminiert oder zusammengeklebt.

Insgesamt werden bei der bevorzugten Ausführungsform der Erfindung fünf Leitungen verwendet: zwei zur Stromversorgung, zwei zur Kommunikation (nicht für eine Sicherheitsvorrichtung, sondern für die sonstige Kommunikation) und eine Busleitung. Die Busleitung wird von der Sicherheitsvorrichtung zusammen mit der Erdleitung benutzt. Durch eine weitere zusätzliche Erdungsleitung kann noch einmal mehr Stabilität erreicht werden. Es ist auch denkbar, bei einer solchen Ausführungsform statt Drähten Leiterbahnen, die aufgedruckt werden können, zu verwenden. Diese Leiterbahnen sind sodann nicht miteinander verflochten, aber mäanderartig übereinander angeordnet, sodass eine Abschirmungswirkung erreicht werden kann.

Die Verbindung zu den einzelnen Leitungen wird jeweils über Goldkontakte hergestellt, welche zum Beispiel gecrimpt werden, und zwar durch die Isolierung hindurch. Die Verflechtung der Drahtpaare erfolgt so, dass sie periodisch etwa alle zwei Meter das gleiche Muster ergibt, sodass die Verbindungen mit bestimmter Sicherheit regelmäßig übereinstimmen an entsprechenden Stellen. Die Verbindungsdosen werden an das Messband geklemmt und werden mit dem Sicherheitssystem und weiteren Hilfsvorrichtungen verbunden.

Das Messband wird nur an einer Stelle geerdet. Am anderen Ende des Messbands befindet sich ein Entstörkondensator, damit das Messband nicht als Antenne wirkt. Der Sicherheitsbus läuft über eine Analogleitung, wobei Strom- und Spannungsmodulation erfolgt. Alle anderen Geräte und Hilfsgeräte werden über die beiden zur sonstigen Kommunikation vorgesehenen Leitungen durchgeführt.

### Bezugszeichenliste:

- A: Aufzugvorrichtung
- S: Aufzugschacht
- K: Fahrkabine
- M1: Markierung
- M2: Markierung
- M3: Markierung
- Mn: Markierung
- V1: Verbindungsvorrichtungen
- V2: Verbindungsvorrichtungen
- Vn: Verbindungsvorrichtungen
- 1: Messband
- 2: obere Aufhängung
- 3: Markierungsseite
- 4: Leitungsseite
- 5: Kommunikationsleitungen
- 6: Datenleitungen
- 7: Elektronikeinheit
- 8: optische Sensor
- 10: Messband
- 11: Trägerband
- 12: Seitenbereich
- 13: Markierungsstreifen
- 14: Leitungen
- 15: Ausschnitt des Innenbereichs
- 20: Messband
- 21: Träger
- 22: Reflektor
- 23: Kunststoffschicht
- 24: Luftspalt
- 25: Codedruck
- 26: Befestigung
- 27: Isolator
- 28: Kupfer- oder Aluminiumleitung
- 29: Isolator
- 30: Leiterbahn
- 31: Isolatorschicht
- 40: Messband
- 41: Leitung
- 42: Metallkäfig
- 43: Markierung
- 94: Leitung
- 45: galvanische Trennung
- 46: Erdungskabel
- 47: Entstörkondensator
- C1: Clip
- C2: Clip
- Cn: Clip
- 50: Messband
- 51: Leitung
- 52: Metallkäfig
- 53: Markierung
- 54: Leitung
- 55: galvanische Trennung
- 56: Erdungskabel
- 57: Erdungskabel
- 58a: Erdungskabel
- 58b: Erdungskabel
- 58n: Erdungskabel
- 61: Leiterpaar
- 62: Leiterpaar
- 63: Leiterpaar
- 64: Erdungskabel
- 65: Erdungskabel
- 66: Erdungskabel
- 67: Erdungskabel
- 68: geerdete Abdeckung
- 69: Aussparung
- 71: Leitungspaare
- 72: Leitungspaare
- 73: Leitungspaare
- 74: Erdungskabel
- 75: Erdungskabel
- 76: Erdungskabel
- 77: Erdungskabel
- 78: Abschirmung
- 79: Aussparung
- 81: Leiterbahnpaar
- 82: Leiterbahnpaar
- 83: Leiterbahnpaar
- 84: Kontakt
- 85: Abschirmung
- 90: Verbindungsvorrichtung
- 91: Klammer
- 92: Verbindungselektrode/Schneidkontakt
- 93: Ausnehmung
- 94: Kabel
- 95a: Schneidkontakt
- 95b: Schneidkontakt
- 95c: isolierendes Unterbrechungsmesser
- 100: Leitung
- 101: Isolierung
- 102: Leitungsdraht
- 103: Kabel
- 104: Crimpvorrichtung
- 110: Messband
- 111: Leiterbahn
- 112: Abnehmerfinger
- 120: Kabel
- 121: Isolierung
- 122: Draht
- 123: Kondensatorplatte
- 130: Kabel
- 131: Kabel
- 140: Kabel
- 141: Kabel
- 150: Steckdose
- 151: Messband
- 152: Kontaktierungsbuchse
- 153: Stecker
- 160: Sicherheitssystem
- 161: Sicherheitskontroller
- 161: Aufzugsteuerung
- 163: Antrieb
- 164: Direktabschaltung
- 165: Leitungen
- O1: optische Schalter
- 02: optische Schalter
- 03: optische Schalter
- On: optische Schalter
- 166: Hilfsgerate
- 170: optischer Sensor
- 171: Messband
- 172: Lagerung
- 180: optische Brücke
- 181: Hauptkörper
- 182: Schenkel
- 183: Schenkel
- 190: Messband / Codeband
- 191: Verbindungsvorrichtung
- 192: Halterung
- 193: beweglich gelagerte Kontaktierung
- 194: Schneidkontakte

## Patentansprüche

1. Messband (1, 10, 40, 50, 110, 151, 171, 190) zur Bestimmung der Position einer Fahrkabine in einem Aufzugschacht, das vertikal im Aufzugschacht angeordnet und in Bezug auf seine Länge so ausgebildet ist, dass es sich wenigstens über zwei Stockwerke erstreckt, und wobei das Messband (1, 10, 40, 50, 110, 151, 171, 190) eine Markierungseinheit (M1, M2, M3, M4, 13, 25, 43, 53) zur Markierung von wenigstens zwei Positionen im Aufzugschacht (S) umfasst, wobei die Markierungseinheit entlang der Länge des Messbandes verläuft, wobei das Messband ein Trägerband (11, 21) umfasst und eine übertragungsvorrichtung zur Übertragung von Informationen aufweist, wobei die Übertragungsvorrichtung wenigstens eine Kommunikationsleitung (5, 14, 28, 30, 41, 51, 61, 62, 63, 71, 72, 73, 81, 82, 83, 111, 122, 130, 140) zur Übermittlung eines Informationssignals umfasst und die wenigstens eine Kommunikationsleitung entlang der Länge des Messbands (1, 10, 40, 50, 110, 151, 171, 190) verläuft bzw. verlaufen, wobei die Kommunikationsleitung als elektrische Leitung zur Übermittlung eines elektrischen Signals oder als Glasfaserleitung zur Übermittlung eines optischen Signals ausgebildet ist, **dadurch gekennzeichnet, dass** die Kommunikationsleitung zur Kommunikation von Stockwerk zu Stockwerk ausgebildet ist, und dass eine obere (2) und untere Montagevorrichtung zur Aufhängung des Messbands im oberen bzw. unteren Bereich des Aufzugsschachts, insbesondere an der Decke bzw. am Boden des Aufzugschachts, vorgesehen ist.

2. Messband (1, 10, 40, 50, 110, 151, 171, 190) nach Anspruch 1, **dadurch gekennzeichnet, dass** die Übertragungsvorrichtung wenigstens eine Versorgungsleitung zur Stromversorgung umfasst, wobei die wenigstens eine Versorgungsleitung entlang der Länge des Messbandes verläuft.

3. Messband (1, 10, 40, 50, 110, 151, 171, 190) nach einem der vorgenannten Ansprüche, **dadurch gekennzeichnet, dass** das Messband (1, 10, 40, 50, 110, 151, 171, 190) als Verbundband aus dem Trägerband (10, 21) und wenigstens einer Verbundschicht ausgebildet ist.

4. Messband (1, 10, 40, 50, 110, 151, 171, 190) nach einem der vorgenannten Ansprüche, **dadurch gekennzeichnet, dass** wenigstens ein Anschlusskontakt zum Kontaktieren, Einspeisen und/oder Abgreifen des zu übermittelnden Signals an bzw. aus der Kommunikationsleitung im Bereich der oberen (2) und/oder unteren Montagevorrichtung vorgesehen ist.

5. Messband (1, 10, 40, 50, 110, 151, 171, 190) nach einem der vorgenannten Ansprüche, **dadurch gekennzeichnet, dass** wenigstens eine der Kommunikationsleitungen und/oder wenigstens eine der Versorgungsleitungen (14, 28, 30, 41, 51, 61, 62, 63, 71, 72, 73, 81, 82, 83, 111, 122, 130, 140) wenigstens einen Zusatzkontakt zum Kontaktieren, Einspeisen und/oder Abgreifen des zu übermittelnden Signals zwischen der oberen und/oder unteren Montagevorrichtung oder zwischen den jeweiligen Anschlusskontakten im Bereich der oberen und/oder unteren Montagevorrichtung aufweist.

6. Messband (1, 10, 40, 50, 110, 151, 171, 190) nach einem der vorgenannten Ansprüche, **dadurch gekennzeichnet, dass** der wenigstens eine Zusatzkontakt als Steckdose und/oder als weibliche Steckverbindung ausgebildet ist, wobei insbesondere eine abnehmbare und/oder aufklappbare Abdeckung des jeweiligen Zusatzkontakts vorhanden ist.

7. Messband (1, 10, 40, 50, 110, 151, 171, 190) nach einem der vorgenannten Ansprüche, **dadurch gekennzeichnet, dass** wenigstens eine der Kontaktleitungen (14, 28, 30, 41, 51, 61, 62, 63, 71, 72, 73, 81, 82, 83, 111, 122, 130, 140) und/oder Versorgungsleitungen als Draht, als aufgedruckte Leiterbahn, als aufgeklebte Leiterbahn oder als Leiterbahn auf einer biegbaren Leiterplatte ausgebildet ist.

8. Messband (1, 10, 40, 50, 110, 151, 171, 190) nach einem der vorgenannten Ansprüche, **dadurch gekennzeichnet, dass** wenigstens eine der Kontaktleitungen (14, 28, 30, 41, 51, 61, 62, 63, 71, 72, 73, 81, 82, 83, 111, 122, 130, 140) und/oder Versorgungsleitungen geschirmt ist, wobei insbesondere wenigstens eine Erdleitung (74, 75, 76, 77) zur Abschirmung vorgesehen ist.

9. Messband (1, 10, 40, 50, 110, 151, 171, 190) nach einem der vorgenannten Ansprüche, **dadurch gekennzeichnet, dass** wenigstens zwei der Kontaktleitungen und/oder eine der Kontaktleitungen und eine der Erdleitungen zur Abschirmung miteinander verflochten und/oder überkreuzt angeordnet sind.

10. Messband (1, 10, 40, 50, 110, 151, 171, 190) nach einem der vorgenannten Ansprüche, **dadurch gekennzeichnet, dass** die Kommunikationsleitung (5, 14, 28, 30, 41, 51, 61, 62, 63, 71, 72, 73, 81, 82, 83, 111, 122, 130, 140) als Bus ausgebildet ist, wobei der Bus insbesondere zur unidirektionalen und/oder bidirektionalen Übertragung von Daten ausgebildet ist.

11. Messband (1, 10, 40, 50, 110, 151, 171, 190) nach einem der vorgenannten Ansprüche, **dadurch gekennzeichnet, dass** eine Erdungsvorrichtung (46, 47, 56, 57, 58a, 58b, 58n) zur Erdung des Messbands und zur Abschirmung der Leitungen vorhanden ist, welche als Abschirmkäfig und/oder Ummantelung ausgebildet ist, welcher bzw. welche die wenigstens eine Kommunikationsleitung und/oder Versorgungsleitung umgibt, und/oder dass das Trägerband als Erdungsvorrichtung zur Erdung des Messbands ausgebildet ist, wobei insbesondere eine galvanische Trennung wenigstens einer der Kontaktleitungen und/oder Versorgungsleitungen zu einer anschließbaren Elektronik vorgesehen ist.

12. Messband (1, 10, 40, 50, 110, 151, 171, 190) nach einem der vorgenannten Ansprüche, **dadurch gekennzeichnet, dass** die Erdungsvorrichtung nur an einem, insbesondere am oberen Ende (46) des Messbands mit der Erde verbindbar ausgebildet ist und/oder am anderen, insbesondere am unteren Ende über eine Kapazität als Entstörkondensator (47) mit der Erde verbindbar ist.

13. Messband (1, 10, 40, 50, 110, 151, 171, 190) nach einem der vorgenannten Ansprüche, **dadurch gekennzeichnet, dass** das Messband an wenigstens drei Stellen (56, 57, 58a, 58b, 58n), insbesondere in regelmäßigen Abständen mit der Erde verbindbar ist.

14. Messband (1, 10, 40, 50, 110, 151, 171, 190) nach einem der vorgenannten Ansprüche, **dadurch gekennzeichnet, dass** das Messband wenigstens teilweise aus einem elektrostriktiven Material zur Änderung der Länge durch Anlegen einer elektrischen Spannung ausgebildet ist.

15. Peripheriegerät für Auf zugvorrichtungen (A), insbesondere Positionsbestimmungsvorrichtung oder Sicherungsvorrichtung (160 ) oder Kommunikationsvorrichtung , mit Messband (1, 10, 40, 50, 110, 151, 171, 190) nach einem der vorgenannten Ansprüche.

16. Peripheriegerät nach Anspruch 15, **dadurch gekennzeichnet, dass** eine Testvorrichtung zum Testen des Messbandes auf Brüche und/oder auf Ausdehnungen des Messbandes hin vorhanden ist, indem eine Laufzeitmessung eines Signals durch wenigstens eine der Kontaktleitungen (5, 14, 28, 30, 41, 51, 61, 62, 63, 71, 72, 73, 81, 82, 83, 111, 122, 130, 140) und/oder ein Kapazitätsmessung wenigstens einer der Kontaktleitungen und/oder eine Durchgangsprüfung wenigstens einer der Kontaktleitungen durchgeführt wird und/oder eine Verbindungstestvorrichtung zum Testen der Verbindung zu wenigstens einer der Kontaktleitungen an einer bestimmten Stelle vorgesehen ist.

17. Auf zugvorrichtung (A), **dadurch gekennzeichnet, dass** ein Peripheriegerät nach Anspruch 15 oder 16 vorgesehen ist.

## Claims

1. Measuring tape (1, 10, 40, 50, 110, 151, 171, 190) for determining the position of a lift cabin in a lift shaft, arranged vertically in the lift shaft and designed with regard to its length in such a way that it extends across at least two storeys, and wherein the measuring tape (1, 10, 40, 50, 110, 151, 171, 190) comprises a marker unit (M1, M2, M3, M4, 13, 25, 43, 53) for marking at least two positions in the lift shaft (S), wherein the marker unit extends along the length of the measuring tape, wherein the measuring tape comprises a support tape (11, 21) and a transmission device for transmitting information, wherein the transmission device comprises at least one communication line (5, 14, 28, 30, 41, 51, 61, 62, 63, 71, 72, 73, 81, 82, 83, 111, 122, 130, 140) for transmitting an information signal, and the at least one communication line extends or extend along the length of the measuring tape (1, 10, 40, 50, 110, 151, 171, 190), wherein the communication line is designed as an electric cable for transmitting an electric signal or as a fibreglass cable for transmitting an optical signal, **characterised in that** the communication line is designed for communicating from storey to storey and **in that** an upper (2) and lower installation device is envisaged for suspending the measuring tape in the upper or lower area of the lift shaft, in particular on the ceiling and/or the floor of the lift shaft.

2. Measuring tape (1, 10, 40, 50, 110, 151, 171, 190) according to claim 1, **characterised in that** the transmission device comprises at least one supply line for supplying power, wherein the at least one supply line extends along the length of the measuring tape.

3. Measuring tape (1, 10, 40, 50, 110, 151, 171, 190) according to one of the preceding claims, **characterised in that** the measuring tape (1, 10, 40, 50, 110, 151, 171, 190) is designed as a compound tape consisting of the support tape (10, 21) and at least one compound layer.

4. Measuring tape (1, 10, 40, 50, 110, 151, 171, 190) according to one of the preceding claims, **characterised in that** at least one connecting contact for contacting, supplying and/or picking up the signal to be transmitted to and/or from the communication line is envisaged in the area of the upper (2) and/or lower installation device.

5. Measuring tape (1, 10, 40, 50, 110, 151, 171, 190) according to one of the preceding claims, **characterised in that** at least one of the communication lines and/or at least one of the supply lines (14, 28, 30, 41, 51, 61, 62, 63, 71, 72, 73, 81, 82, 83, 111, 122, 130, 140) comprise at least one additional contact for contacting, supplying and/or picking up the signal to be transmitted between the upper and/or lower installation device or between the relevant connection contacts in the area of the upper and/or lower installation device.

6. Measuring tape (1, 10, 40, 50, 110, 151, 171, 190) according to one of the preceding claims, **characterised in that** the at least one additional contact is designed as a socket and/or as a female plug connection, wherein a removable and/or fold-out cover of the relevant additional contact is provided in particular.

7. Measuring tape (1, 10, 40, 50, 110, 151, 171, 190) according to one of the preceding claims, **characterised in that** at least one of the contact lines (14, 28, 30, 41, 51, 61, 62, 63, 71, 72, 73, 81, 82, 83, 111, 122, 130, 140) and/or supply lines is/are designed as a wire, as printed-on strip conductor, as a glued-on strip conductor or as a strip conductor on a bendable circuit board.

8. Measuring tape (1, 10, 40, 50, 110, 151, 171, 190) according to one of the preceding claims, **characterised in that** at least one of the contact lines (14, 28, 30, 41, 51, 61, 62, 63, 71, 72, 73, 81, 82, 83, 111, 122, 130, 140) and/or supply lines is shielded, wherein at least one earth wire (74, 75, 76, 77) is envisaged for shielding.

9. Measuring tape (1, 10, 40, 50, 110, 151, 171, 190) according to one of the preceding claims, **characterised in that** at least two of the contact lines and/or one of the contact lines and one of the earth wires is/are plaited with each other and/or crossed over to form the shielding.

10. Measuring tape (1, 10, 40, 50, 110, 151, 171, 190) according to one of the preceding claims, **characterised in that** the communication lines (5, 14, 28, 30, 41, 51, 61, 62, 63, 71, 72, 73, 81, 82, 83, 111, 122, 130, 140) are designed as a bus, wherein the bus is in particular designed for the unidirectional and/or bidirectional transmission of data.

11. Measuring tape (1, 10, 40, 50, 110, 151, 171, 190) according to one of the preceding claims, **characterised in that** an earthing device (46, 47, 56, 57, 58a, 58b, 58n) for earthing the measuring tape and for shielding the lines is provided, which is designed as a shielding cage and/or sleeve, which surrounds or surround the at least one communication line and/or the supply line and/or **in that** the support tape is designed as an earthing device for earthing the measuring tape, wherein a galvanic separation of at least one of the contact lines and/or the supply lines from connectable electronics is in particular envisaged.

12. Measuring tape (1, 10, 40, 50, 110, 151, 171, 190) according to one of the preceding claims, **characterised in that** the earthing device is designed to be connectable with the earth only at one, in particular the upper end (46) of the measuring tape and/or can be connected to earth at the other, in particular the lower end via a capacity as an anti-interference capacitor (47).

13. Measuring tape (1, 10, 40, 50, 110, 151, 171, 190) according to one of the preceding claims, **characterised in that** the measuring tape can be connected to earth in at least three places (56, 57, 58a, 58b, 58n), in particular at regular intervals.

14. Measuring tape (1, 10, 40, 50, 110, 151, 171, 190) according to one of the preceding claims, **characterised in that** the measuring tape is designed at least in part from an electrostrictive material for changing the length by applying an electric voltage.

15. Peripheral unit for lift devices (A), in particular a position determination device or securing device (160), with a measuring tape (1, 10, 40, 50, 110, 151, 171, 190) according to one of the preceding claims.

16. Peripheral unit according to claim 15, **characterised in that** a test device for testing the measuring tape for breaks and/or for expansions of said measuring tape is provided **in that** a run-time measurement of a signal through at least one of the contact lines (5, 14, 28, 30, 41, 51, 61, 62, 63, 71, 72, 73, 81, 82, 83, 111, 122, 130, 140) and/or a capacity measurement of at least one of the contact lines and/or a continuity check of at least one of the contact lines is carried out and/or a connection test device for testing the connection with at least one of the contact lines at a specific point is envisaged.

17. Lift device (A), **characterised in that** a peripheral unit according to claim 15 or 16 is envisaged.

## Revendications

1. Ruban de mesure (1, 10, 40, 50, 110, 151, 171, 190) pour déterminer la position d'une cabine dans une cage d'ascenseur, lequel ruban est positionné verticalement dans la cage d'ascenseur et est configuré du point de vue de sa longueur de telle sorte qu'il s'étend sur au moins deux étages, ledit ruban de mesure (1, 10, 40, 50, 110, 151, 171, 190) comprenant une unité de marquage (M1, M2, M3, M4, 13, 25, 43, 53) pour marquer au moins deux positions dans la cage d'ascenseur (S), l'unité de marquage s'étendant le long de la longueur du ruban de mesure, le ruban de mesure comprenant une bande support (11, 21) et présentant un dispositif de transmission pour transmettre des informations, ledit dispositif de transmission comprenant au moins une ligne de communication (5, 14, 28, 30, 41, 51, 61, 62, 63, 71, 72, 73, 81, 82, 83, 111, 122, 130, 140) pour transmettre un signal d'information et ladite au moins une ligne de communication s'étendant le long de la longueur du ruban de mesure (1, 10, 40, 50, 110, 151, 171, 190), la ligne de communication étant conçue sous la forme d'une conduite électrique pour transmettre un signal électrique ou sous la forme d'une conduite à fibres optiques pour transmettre un signal optique, **caractérisé en ce que** la ligne de communication est conçue pour communiquer d'un étage à l'autre, et **en ce qu'**un dispositif de montage supérieur (2) et inférieur est prévu pour suspendre le ruban de mesure dans la zone supérieure et inférieure respectivement de la cage d'ascenseur, en particulier au plafond et au plancher de la cage d'ascenseur respectivement.

2. Ruban de mesure (1, 10, 40, 50, 110, 151, 171, 190) selon la revendication 1, **caractérisé en ce que** le dispositif de transmission comprend au moins une ligne d'alimentation pour l'alimentation en courant, ladite au moins une ligne d'alimentation s'étendant le long de la longueur du ruban de mesure.

3. Ruban de mesure (1, 10, 40, 50, 110, 151, 171, 190) selon l'une des revendications précédentes, **caractérisé en ce que** le ruban de mesure (1, 10, 40, 50, 110, 151, 171, 190) est réalisé sous la forme d'un ruban composite composé de la bande support (10, 21 ) et d'au moins une couche composite.

4. Ruban de mesure (1, 10, 40, 50, 110, 151, 171, 190) selon l'une des revendications précédentes, **caractérisé en ce qu'**au moins un contact de connexion est prévu pour établir un contact, introduire et/ou prélever le signal à transmettre vers ou de la ligne de communication dans la zone du dispositif de montage supérieur (2) et inférieur.

5. Ruban de mesure (1, 10, 40, 50, 110, 151, 171, 190) selon l'une des revendications précédentes, **caractérisé en ce qu'**au moins une des lignes de communication et/ou au moins une des lignes d'alimentation (14, 28, 30, 41, 51, 61, 62, 63, 71, 72, 73, 81, 82, 83, 111, 122, 130, 140) comporte au moins un contact supplémentaire pour établir un contact, introduire et/ou prélever le signal à transmettre entre le dispositif de montage inférieur et/ou supérieur ou entre les contacts de connexion respectifs dans la zone du dispositif de montage supérieur et/ou inférieur.

6. Ruban de mesure (1, 10, 40, 50, 110, 151, 171, 190) selon l'une des revendications précédentes, **caractérisé en ce que** le au moins un contact supplémentaire est conçu sous la forme d'une fiche femelle et/ou d'un connecteur femelle, un couvercle amovible et/ou rabattable du contact supplémentaire respectif étant en particulier prévu.

7. Ruban de mesure (1, 10, 40, 50, 110, 151, 171, 190) selon l'une des revendications précédentes, **caractérisé en ce qu'**au moins une des lignes de contact (14, 28, 30, 41, 51, 61, 62, 63, 71, 72, 73, 81, 82, 83, 111, 122, 130, 140) et/ou des lignes d'alimentation est conçue sous la forme d'un fil métallique, d'une piste conductrice imprimée, d'une piste conductrice collée ou d'une piste conductrice sur un circuit imprimé flexible.

8. Ruban de mesure (1, 10, 40, 50, 110, 151, 171, 190) selon l'une des revendications précédentes, **caractérisé en ce qu'**au moins une des lignes de contact (14, 28, 30, 41, 51, 61, 62, 63, 71, 72, 73, 81, 82, 83, 111, 122, 130, 140) et/ou des lignes d'alimentation est blindée, en particulier, au moins une ligne de terre (74, 75, 76, 77) est prévue pour le blindage.

9. Ruban de mesure (1, 10, 40, 50, 110, 151, 171, 190) selon l'une des revendications précédentes, **caractérisé en ce qu'**au moins deux des lignes de contact et/ou une des lignes de contact et une des lignes de terre pour le blindage sont torsadées ensemble et/ou entrecroisées.

10. Ruban de mesure (1, 10, 40, 50, 110, 151, 171, 190) selon l'une des revendications précédentes, **caractérisé en ce que** la ligne de communication (5, 14, 28, 30, 41, 51, 61, 62, 63, 71, 72, 73, 81, 82, 83, 111, 122, 130, 140) est conçue sous la forme d'un bus configuré pour transmettre des données notamment de manière unidirectionnelle et/ou bidirectionnelle.

11. Ruban de mesure (1, 10, 40, 50, 110, 151, 171, 190) selon l'une des revendications précédentes, **caractérisé en ce qu'**il est prévu un dispositif de mise à la terre (46, 47, 56, 57, 58a, 58b, 58n) pour la mise à la terre du ruban de mesure et pour le blindage des lignes, ledit dispositif étant conçu sous la forme d'une cage de blindage et/ou d'une gaine laquelle/lesquelles entoure(nt) la au moins une ligne de communication et/ou d'alimentation, et/ou la bande support est conçue sous la forme du dispositif de mise à la terre pour mettre à la terre le ruban de mesure, une séparation galvanique d'au moins une des lignes de contact et/ou des lignes d'alimentation vers un équipement électronique raccordable étant en particulier prévue.

12. Ruban de mesure (1, 10, 40, 50, 110, 151, 171, 190) selon l'une des revendications précédentes, **caractérisé en ce que** le dispositif de mise à la terre est conçu pour n'être raccordé à la terre qu'à une extrémité, en particulier à l'extrémité supérieure (46) du ruban de mesure, et/ou pour être raccordé à la terre à l'autre extrémité, en particulier à l'extrémité inférieure, par le biais d'une capacité réalisée sous la forme d'un condensateur d'antiparasitage (47).

13. Ruban de mesure (1, 10, 40, 50, 110, 151, 171, 190) selon l'une des revendications précédentes, **caractérisé en ce que** le ruban de mesure peut être raccordé à la terre en au moins trois points (56, 57, 58a, 58b, 58n), en particulier à intervalles réguliers.

14. Ruban de mesure (1, 10, 40, 50, 110, 151, 171, 190) selon l'une des revendications précédentes, **caractérisé en ce que** le ruban de mesure est constitué au moins partiellement d'un matériau électrostrictif pour modifier la longueur en appliquant une tension électrique.

15. Appareil périphérique pour des dispositifs d'ascenseur (A), en particulier un dispositif de détermination de position ou un dispositif de sécurité (160) ou un dispositif de communication, avec un ruban de mesure (1, 10, 40, 50, 110, 151, 171, 190) selon l'une des revendications précédentes.

16. Appareil périphérique selon la revendication 15, **caractérisé en ce qu'**il est prévu un dispositif de test pour tester la présence de ruptures et/ou d'étirages du ruban de mesure en effectuant une mesure de temps de transit d'un signal à travers au moins une des lignes de contact (5, 14, 28, 30, 41, 51, 61, 62, 63, 71, 72, 73, 81, 82, 83, 111, 122, 130, 140) et/ou une mesure de capacité d'au moins une des lignes de contact et/ou un contrôle de continuité d'au moins une des lignes de contact, et/ou en prévoyant un dispositif de contrôle de connexion pour tester la connexion avec au moins une des lignes de contact en un point particulier.

17. Dispositif d'ascenseur (A), **caractérisé en ce qu'**il est prévu un appareil périphérique selon la revendication 15 ou 16.
